# EUROPEAN PATENT APPLICATION

(11) **EP 4 838 990 A1**
(43) Date of publication of application: **11.11.2026**
(21) Application number: 25736330.9
(22) Date of filing: 06.01.2025
(51) Int. Cl.: H04W 72/232, H04J 3/16, H04W 72/231, H04L 1/08, H04W 72/0446, H04W 72/0457, H04W 84/06

(54) **METHOD AND APPARATUS FOR IMPROVING COVERAGE OF CONTROL CHANNEL TRANSMISSION FOR NON-TERRESTRIAL NETWORK-BASED COMMUNICATION**

(30) Priority: 05.01.2024 KR 20240002428; 11.11.2024 US 202463719086 P
(71) Applicant: LG Electronics Inc., Yeongdeungpo-gu Seoul 07336 (KR)
(72) Inventor: HWANG, Daesung, Seoul 06772 (KR); LEE, Seungmin, Seoul 06772 (KR); PARK, Hanjun, Seoul 06772 (KR)
(74) Representative: Plasseraud IP
(86) International application number: PCT/KR2025/000256
(87) International publication number: WO 2025/147177

(57) **Abstract**

Proposed is an operating method of a first device (100) in a wireless communication system. The method may comprise the steps of: performing a first monitoring operation on the basis of a first base station-to-device physical control channel resource; performing a second monitoring operation on the basis of a second base station-to-device physical control channel resource; and obtaining base station-to-device control information on the basis of at least one of the first monitoring operation or the second monitoring operation.

## Description

### TECHNICAL FIELD

This disclosure relates to a wireless communication system.

### BACKGROUND ART

5G NR is the next generation technology of long term evolution (LTE) and is a new clean-slate form mobile communication system with high performance, low latency, and high availability. 5G NR may utilize all available spectrum resources, from the low frequency bands below 1 GHz to the mid-frequency bands from 1 GHz to 10 GHz and the high frequency (millimeter wave) bands above 24 GHz.

The 6G (wireless communication) system is aimed at (i) very high data rates per device, (ii) a very large number of connected devices, (iii) global connectivity, (iv) very low latency, (v) lowering energy consumption for battery-free internet of things (IoT) devices, (vi) ultra-reliable connectivity, and (vii) connected intelligence with machine learning capabilities. The vision of the 6G system may be in four aspects: intelligent connectivity, deep connectivity, holographic connectivity, and ubiquitous connectivity, and the 6G system may satisfy the requirements as shown in Table 1 below. For example, Table 1 may represent an example of the requirements of a 6G system.

**[Table 1]**

| | |
|---|---|
| Per device peak data rate | 1 Tbps |
| E2E latency | 1 ms |
| Maximum spectral efficiency | 100bps/Hz |
| Mobility support | Up to 1000km/hr |
| Satellite integration | Fully |
| AI | Fully |
| Autonomous vehicle | Fully |
| XR | Fully |
| Haptic Communication | Fully |

### DISCLOSURE

### TECHNICAL SOLUTION

According to an embodiment of the present disclosure, a method that may be performed by a first device may be proposed. For example, the method may comprise: performing a first monitoring operation, based on a first base station-to-device physical control channel resource; performing a second monitoring operation, based on a second base station-to-device physical control channel resource; and obtaining base station-to-device control information, based on at least one of the first monitoring operation or the second monitoring operation.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: perform a first monitoring operation, based on a first base station-to-device physical control channel resource; perform a second monitoring operation, based on a second base station-to-device physical control channel resource; and obtaining base station-to-device control information, based on at least one of the first monitoring operation or the second monitoring operation.

According to an embodiment of the present disclosure, a processing device adapted to control a first device may be proposed. For example, the processing device may comprise: at least one processor; and at least one memory connected to the at least one processor and storing instructions. For example, the instructions, based on being executed by the at least one processor, cause the first device to: perform a first monitoring operation, based on a first base station-to-device physical control channel resource; perform a second monitoring operation, based on a second base station-to-device physical control channel resource; and obtain base station-to-device control information, based on at least one of the first monitoring operation or the second monitoring operation.

According to an embodiment of the present disclosure, a non-transitory computer-readable storage medium storing instructions may be proposed. For example, the instructions, when executed, may cause a first device to: perform a first monitoring operation, based on a first base station-to-device physical control channel resource; perform a second monitoring operation, based on a second base station-to-device physical control channel resource; and obtaining base station-to-device control information, based on at least one of the first monitoring operation or the second monitoring operation.

According to an embodiment of the present disclosure, a method that may be performed by a second device may be proposed. For example, the method may comprise: transmitting, to a first device, base station-to-device control information based on a first base station-to-device physical control channel resource; and transmitting, to the first device, the base station-to-device control information based on a second base station-to-device physical control channel resource, wherein the first base station-to-device physical control channel resource and the second base station-to-device physical control channel resource may be included in different slots in the same search space.

According to an embodiment of the present disclosure, a second device may be proposed. For example, the second device may comprise: at least one transceiver; at least one processor; and at least one memory connected to the at least one processor and storing instructions. For example, the instructions, based on being executed by the at least one processor, may cause the second device to: transmit, to a first device, base station-to-device control information based on a first base station-to-device physical control channel resource; and transmit, to the first device, the base station-to-device control information based on a second base station-to-device physical control channel resource, wherein the first base station-to-device physical control channel resource and the second base station-to-device physical control channel resource may be included in different slots in the same search space.

### BRIEF DESCRIPTION OF THE DRAWINGS

FIG. 1 shows a communication structure that can be provided in a 6G system, according to one embodiment of the present disclosure.
FIG. 2 shows an electromagnetic spectrum, according to one embodiment of the present disclosure.
FIG. 3 shows an example of an NTN typical scenario based on a transparent payload, according to one embodiment of the present disclosure.
FIG. 4 shows an example of an NTN typical scenario based on a regenerative payload, according to one embodiment of the present disclosure.
FIG. 5 shows an example of a sensing operation, according to one embodiment of the present disclosure.
FIG. 6 shows a structure of a slot of a frame, based on an embodiment of the present disclosure.
FIG. 7 shows an example of a BWP, based on an embodiment of the present disclosure.
FIG. 8 shows a procedure of performing V2X or SL communication by a UE based on a resource allocation mode, based on an embodiment of the present disclosure.
FIG. 9 shows a transparent payload-based scenario of a non-terrestrial network according to an embodiment of the present disclosure.
FIG. 10 shows a regenerative payload-based scenario of a non-terrestrial network according to an embodiment of the present disclosure.
FIG. 11 shows timing advance (TA) components in a non-terrestrial network (e.g., NTN) according to an embodiment of the present disclosure.
FIG. 12 shows components of a non-terrestrial network (e.g., NTN) with a transparent payload according to an embodiment of the present disclosure.
FIG. 13 shows an Earth-fixed cell or an Earth-moving cell according to an embodiment of the present disclosure.
FIG. 14 shows characteristic differences according to a non-terrestrial network (e.g., NTN), according to an embodiment of the present disclosure.
FIG. 15 shows a scheduling offset that may be applied in a non-terrestrial network (e.g., NTN) according to an embodiment of the present disclosure.
FIG. 16 shows a UE-specific TA and a common TA according to an embodiment of the present disclosure.
FIG. 17 shows an orbital parameter ephemeris format according to an embodiment of the present disclosure.
FIG. 18 shows an example of circular polarization according to an embodiment of the present disclosure.
FIG. 19 shows the same base station-to-UE control information (e.g., DCI) repeatedly transmitted through a plurality of base station-to-UE physical control channel (e.g., PDCCH) resources according to an embodiment of the present disclosure.
FIG. 20 shows the same base station-to-UE control information (e.g., DCI) repeatedly transmitted through a plurality of base station-to-UE physical control channel (e.g., PDCCH) resources according to an embodiment of the present disclosure.
FIG. 21 shows a procedure of operations that may be performed by a first device, according to an embodiment of the present disclosure.
FIG. 22 shows a procedure of operations that may be performed by a second device, according to an embodiment of the present disclosure.
FIG. 23 shows a communication system 1, based on an embodiment of the present disclosure.
FIG. 24 shows wireless devices, based on an embodiment of the present disclosure.
FIG. 25 shows a signal process circuit for a transmission signal, based on an embodiment of the present disclosure.
FIG. 26 shows another example of a wireless device, based on an embodiment of the present disclosure.
FIG. 27 shows a hand-held device, based on an embodiment of the present disclosure.
FIG. 28 shows a vehicle or an autonomous vehicle, based on an embodiment of the present disclosure.

### MODE FOR INVENTION

In the present disclosure, "A or B" may mean "only A", "only B" or "both A and B." In other words, in the present disclosure, "A or B" may be interpreted as "A and/or B". For example, in the present disclosure, "A, B, or C" may mean "only A", "only B", "only C", or "any combination of A, B, C".

A slash (/) or comma used in the present disclosure may mean "and/or". For example, "A/B" may mean "A and/or B". Accordingly, "A/B" may mean "only A", "only B", or "both A and B". For example, "A, B, C" may mean "A, B, or C".

In the present disclosure, "at least one of A and B" may mean "only A", "only B", or "both A and B". In addition, in the present disclosure, the expression "at least one of A or B" or "at least one of A and/or B" may be interpreted as "at least one of A and B".

In addition, in the present disclosure, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present disclosure may mean "for example". Specifically, when indicated as "control information (PDCCH)", it may mean that "PDCCH" is proposed as an example of the "control information". In other words, the "control information" of the present disclosure is not limited to "PDCCH", and "PDCCH" may be proposed as an example of the "control information". In addition, when indicated as "control information (e.g., PDCCH)", it may also mean that "PDCCH" is proposed as an example of the "control information".

In the following description, 'when, if, or in case of' may be replaced with 'based on'.

In the present specification, obtaining, by a device, information may include the information being (pre-)configured for the device, the information being received by the device from another entity, and the device generating the information.

A technical feature described individually in one figure in the present disclosure may be individually implemented, or may be simultaneously implemented.

In the present disclosure, a higher layer parameter may be a parameter which is configured, pre-configured or predefined for a UE. For example, a base station or a network may transmit the higher layer parameter to the UE. For example, the higher layer parameter may be transmitted through radio resource control (RRC) signaling or medium access control (MAC) signaling.

In this specification, being "configured or defined" may be interpreted as being configured or pre-configured to a device via predefined signaling (e.g., SIB, MAC, RRC) from a base station or network. In this specification, being "configured or defined" may be interpreted as being pre-configured to a device.

The technology described below may be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), and so on. The CDMA may be implemented with a radio technology, such as universal terrestrial radio access (UTRA) or CDMA-2000. The TDMA may be implemented with a radio technology, such as global system for mobile communications (GSM)/general packet ratio service (GPRS)/enhanced data rate for GSM evolution (EDGE). The OFDMA may be implemented with a radio technology, such as institute of electrical and electronics engineers (IEEE) 802.11 (Wi-Fi), IEEE 802.16 (WiMAX), IEEE 802.20, evolved UTRA (E-UTRA), and so on. IEEE 802.16m is an evolved version of IEEE 802.16e and provides backward compatibility with a system based on the IEEE 802.16e. The UTRA is part of a universal mobile telecommunication system (UMTS). 3rd generation partnership project (3GPP) long term evolution (LTE) is part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

The technologies proposed in this specification may be implemented in 6G wireless technologies and may be applied to various 6G systems. For example, 6G systems may include key factors such as enhanced mobile broadband (eMBB), ultra-reliable low latency communications (URLLC), massive machine-type communication (mMTC), artificial intelligence (AI) integrated communication, tactile internet, and high throughput, high network capacity, high energy efficiency, low backhaul and access network congestion, and enhanced data security.

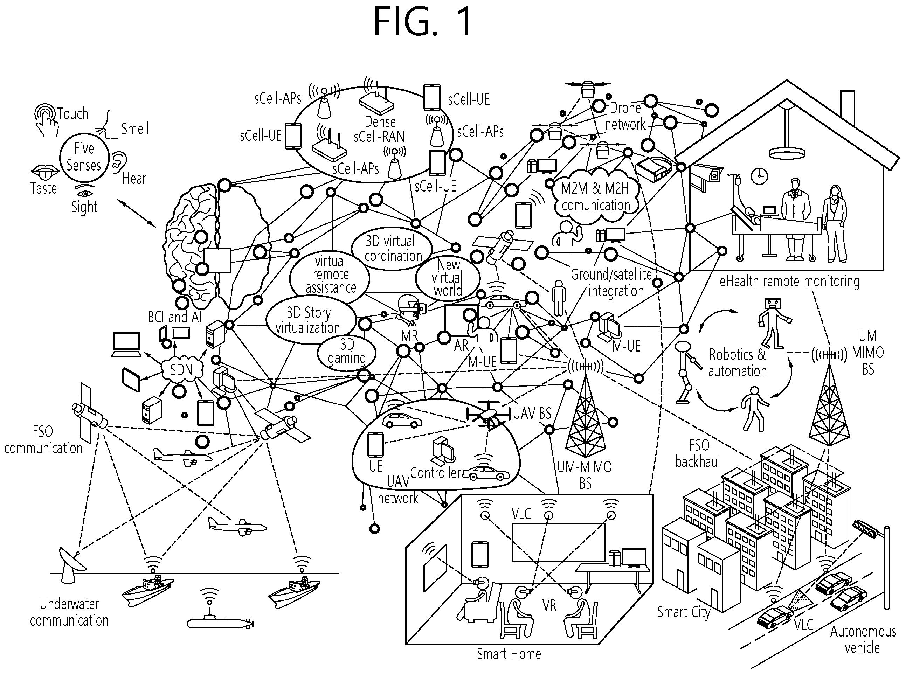

FIG. 1 shows a communication structure that can be provided in a 6G system, according to one embodiment of the present disclosure. The embodiment of FIG. 1 may be combined with various embodiments of the present disclosure.

In 6G, new network features may include the follows.
- Satellites integrated network
- Connected intelligence: Unlike previous generations of wireless communication systems, 6G is revolutionary and the wireless evolution will be updated from "connected things" to "connected intelligence". AI can be applied at each step of the communication procedure (or each step of signal processing, as will be described later).
- Seamless integration wireless information and energy transfer
- Ubiquitous super 3D connectivity: Super 3D connection will be generated from 6G ubiquity to access networks and core network functions on drones and very low Earth orbit satellites.

Given the above new network characteristics of 6G, some common requirements may be as follows
- Small cell networks
- Ultra-dense heterogeneous network
- High-capacity backhaul
- Radar technology integrated with mobile technology: High-precision localization (or location-based services) through communication is one of the features of 6G wireless communication systems. Therefore, radar systems will be integrated with 6G networks.
- Softwarization and virtualization

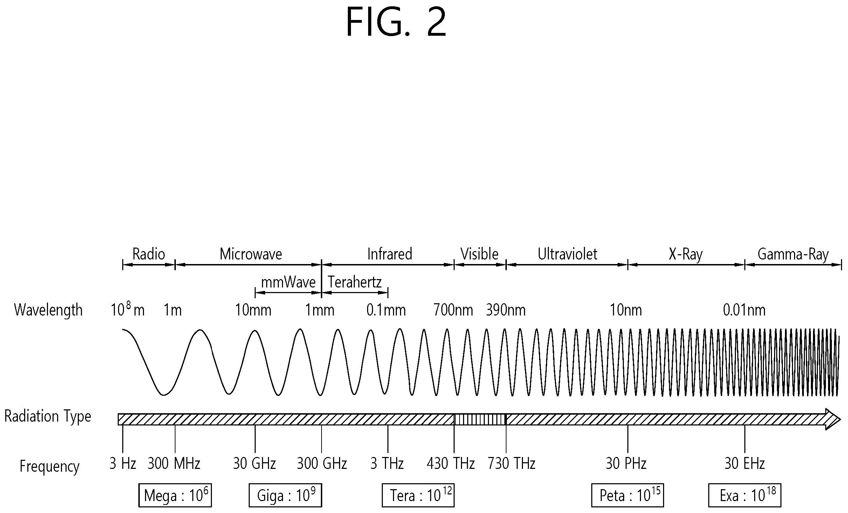

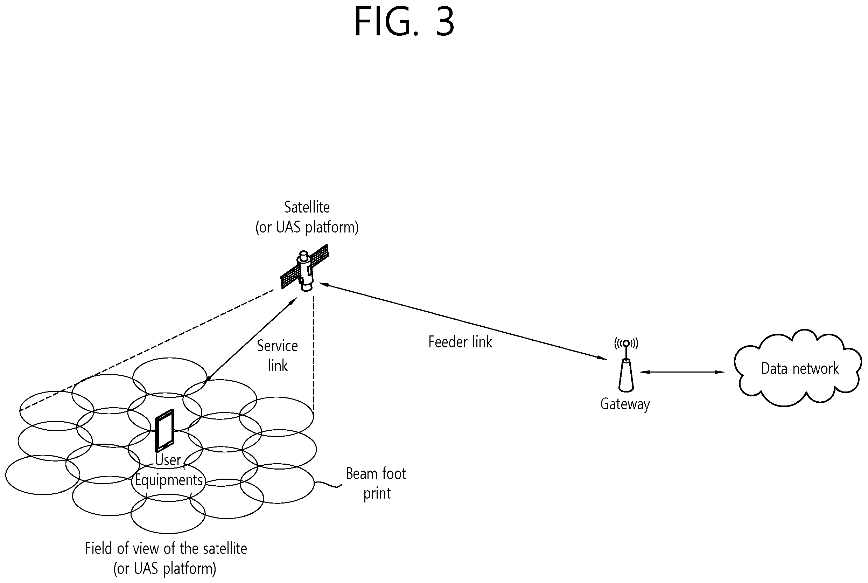

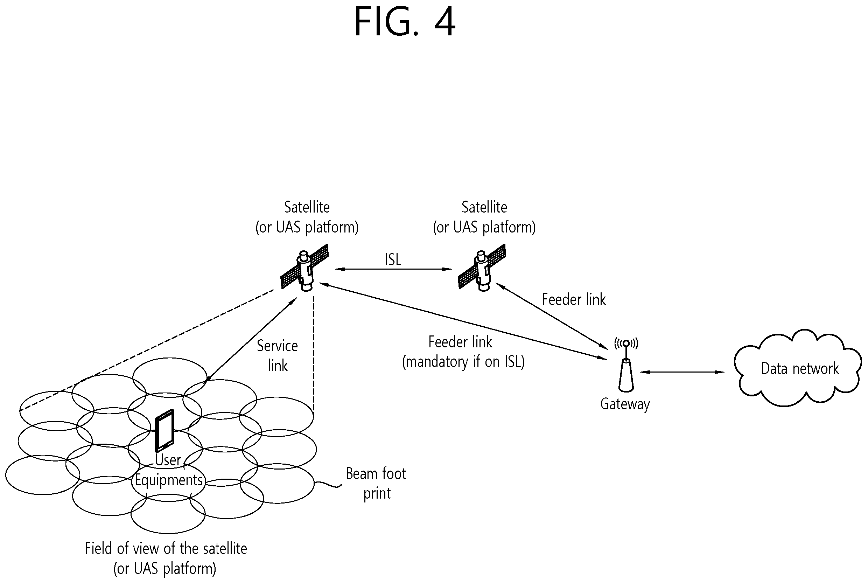

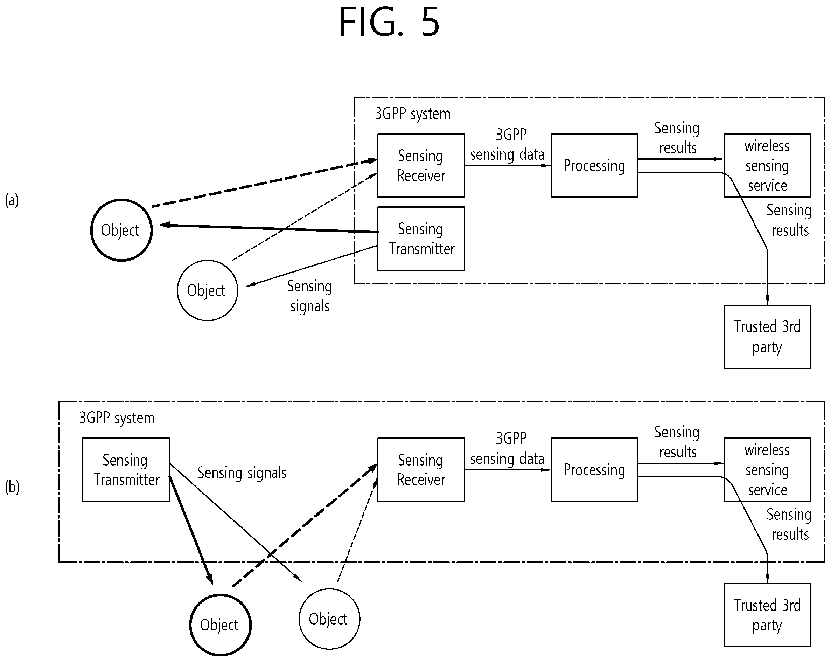

The following describes the core implementation technologies for 6G systems.
- Artificial intelligence: Introducing AI into telecommunications may simplify and improve real-time data transmission. AI may use numerous analytics to determine the way complex target tasks are performed, which means AI may increase efficiency and reduce processing delays. Time-consuming tasks such as handover, network selection, and resource scheduling may be performed instantly by using AI. AI may also play an important role in machine-to-machine, machine-to-human, and human-to-machine communication. AI may also be a rapid communication in brain computer interface (BCI). AI-based communication systems may be supported by metamaterials, intelligent structures, intelligent networks, intelligent devices, intelligent cognitive radios, self-sustaining wireless networks, and machine learning.
- THz Communication (Terahertz Communication): Data rates can be increased by increasing bandwidth. This can be accomplished by using sub-THz communication with a wide bandwidth and applying advanced massive MIMO technology. THz waves, also known as sub-millimeter radiation, refer to frequency bands between 0.1 and 10 THz with corresponding wavelengths typically ranging from 0.03 mm-3 mm. The 100 GHz-300 GHz band range (Sub THz band) is considered the main part of the THz band for cellular communications. Adding the Sub-THz band to the mmWave band increases the capacity of 6G cellular communications. 300 GHz-3 THz in the defined THz band is in the far infrared (IR) frequency band. The 300 GHz-3 THz band is part of the optical band, but it is on the border of the optical band, just behind the RF band. Thus, the 300 GHz-3 THz band exhibits similarities to RF. FIG. 2 shows an electromagnetic spectrum, according to one embodiment of the present disclosure. The embodiment of FIG. 2 may be combined with various embodiments of the present disclosure. Key characteristics of THz communications include (i) widely available bandwidth to support very high data rates, and (ii) high path loss at high frequencies (for which highly directive antennas are indispensable). The narrow beamwidth produced by highly directive antennas reduces interference. The small wavelength of THz signals allows a much larger number of antenna elements to be integrated into devices and BSs operating in this band. This enables the use of advanced adaptive array techniques that can overcome range limitations.
- Large-scale MIMO
- HBF, Hologram Beamforming
- Optical wireless technology
- FSO Backhaul Network
- Quantum Communication
- Cell-free Communication
- Integration of Wireless Information and Power Transmission
- Integration of Wireless Communication and Sensing
- Integrated Access and Backhaul Network
- Big data Analysis
- Reconfigurable Intelligent Surface
- Metaverse
- Block-chain
- UAV, Unmanned Aerial Vehicle: Unmanned aerial vehicles (UAVs), or drones, will be an important component of 6G wireless communications. In most cases, high-speed data wireless connection is provided using UAV technology. A BS entity is installed on a UAV to provide cellular connection. UAVs have specific features not found in fixed BS infrastructure, such as easy deployment, strong line-of-sight links, and freedom of controlled mobility. During emergencies, such as natural disasters, the deployment of terrestrial communication infrastructure is not economically feasible and sometimes cannot provide services in volatile environments. UAVs can easily handle these situations. UAVs will be a new paradigm in wireless communications. This technology facilitates three basic requirements of wireless networks: eMBB, URLLC, and mMTC. UAVs can also support many other purposes such as enhancing network connectivity, fire detection, disaster emergency services, security and surveillance, pollution monitoring, parking monitoring, accident monitoring, etc. Therefore, UAV technology is recognized as one of the most important technologies for 6G communications.
- Advanced air mobility, AAM: AAM is the higher-level concept of urban air mobility (UAM), which refers to air transportation in urban centers, and may include travel between urban centers and regional hubs.
- Autonomous driving, self-driving: Vehicle to everything (V2X), a key element in building an autonomous driving infrastructure, may be a technology that allows cars to communicate and share with various elements on the road to drive autonomously, such as vehicle to vehicle (V2V) and vehicle to infrastructure (V2I). To maximize the performance of autonomous driving and ensure high safety, fast transmission speeds and low latency technologies are essential. In addition, in the future, autonomous driving may need to go beyond delivering warnings and intervene actively in vehicle operations and take control of the vehicle in dangerous situations. To do so, the amount of information that needs to be transmitted and received may be enormous, and in 6G, faster transmission speeds and lower latency than 5G are expected to maximize autonomous driving.
- Non-terrestrial networks, NTN: An NTN may represent a network or network segment that uses radio frequency (RF) resources aboard a satellite (or unmanned aerial system (UAS) platform). FIG. 3 shows an example of an NTN typical scenario based on a transparent payload, according to one embodiment of the present disclosure. FIG. 4 shows an example of an NTN typical scenario based on a regenerative payload, according to one embodiment of the present disclosure. The embodiments of FIG. 3 or FIG. 4 may be combined with various embodiments of the present disclosure. Referring to FIG. 3, a satellite (or UAS platform) may establish a service link with a UE. The satellite (or UAS platform) may be connected to a gateway via a feeder link. The satellite may be connected to the data network via a gateway. A beam footprint may refer to an area where signals transmitted by a satellite can be received. Referring to FIG. 4, a satellite (or UAS platform) may establish a service link with a UE. A satellite (or UAS platform) connected to a UE may be connected to other satellites (or UAS platforms) via inter-satellite links (ISLs). The other satellites (or UAS platforms) may be connected to a gateway via feeder links. Based on the regenerative payload, the satellite may be connected to the data network via other satellites and a gateway. If an ISL does not exist between the satellite and another satellite, a feeder link between the satellite and a gateway may be required. FIG. 3 and FIG. 4 are just examples of NTN scenarios, and NTN may be implemented based on scenarios in many different ways. For example, a satellite (or UAS platform) may implement a transparent or regenerative (with on board processing) payload. For example, the satellite (or UAS platform) may generate multiple beams over a service area designated based on the field of view of the satellite (or UAS platform). For example, the field of view of the satellite (or UAS platform) may vary depending on the on-board antenna diagram and the minimum elevation angle. For example, a transparent payload may include radio frequency filtering, frequency conversion, and amplification. Thus, the waveform signal repeated by the payload may not be changed. For example, a regenerative payload may include radio frequency filtering, frequency conversion and amplification, demodulation/decoding, switching and/or routing, and coding/modulation. For example, a regenerative payload may be substantially equivalent to carrying all or part of a base station's functionality on board a satellite (or UAS platform).
- Integrated sensing and communication, ISAC: Wireless sensing is a technology that uses radio frequencies to determine an object's instantaneous linear velocity, angle, distance (range), etc. to obtain information about an environment and/or the properties of an object in the environment. Since radio frequency sensing function does not require connecting to an object through a device in the network, it may provide a service for object positioning without a device. The ability to obtain range, velocity, and angle information from radio frequency signals can provide a wide range of new capabilities, such as detection of various objects, object recognition (e.g., vehicles, humans, animals, UAVs), and high-precision positioning, tracking, and activity recognition. Wireless sensing services may provide information to a variety of industries (e.g., unmanned aerial vehicles, smart homes, V2X, factories, railroads, public safety, etc.) enabling applications that provide, for example, intruder detection, assisted vehicle steering and navigation, trajectory tracking, conflict avoidance, traffic management, health and transportation management, and more. In some cases, wireless sensing may utilize non-3GPP type sensors (e.g., radar, cameras) to further support 3GPP-based sensing. For example, the operation of a wireless sensing service, e.g., the sensing operation, may rely on handling the transmission, reflection, and scattering of wireless sensing signals. Thus, wireless sensing may provide an opportunity to enhance existing communication systems from telecommunication networks to wireless communication and sensing networks. FIG. 5 shows an example of a sensing operation, according to one embodiment of the present disclosure. The embodiment of FIG. 5 may be combined with various embodiments of the present disclosure. Specifically, (a) of FIG. 5 shows an example of sensing using a sensing receiver and a sensing transmitter that are co-located (e.g., monostatic sensing), and (b) of FIG. 5 shows an example of sensing using separate sensing receivers and sensing transmitters (e.g., bistatic sensing).

Layers of a radio interface protocol between the UE and the network can be classified into a first layer (layer 1, L1), a second layer (layer 2, L2), and a third layer (layer 3, L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

A physical layer provides an upper layer with an information transfer service through a physical channel. The physical layer is connected to a medium access control (MAC) layer which is an upper layer of the physical layer through a transport channel. Data is transferred between the MAC layer and the physical layer through the transport channel. The transport channel is classified according to how and with what characteristics data is transmitted through a radio interface.

Between different physical layers, e.g., a physical layer of a transmitter and a physical layer of a receiver, data are transferred through the physical channel. The physical channel is modulated using an orthogonal frequency division multiplexing (OFDM) scheme, and utilizes time and frequency as a radio resource.

The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. The MAC layer provides data transfer services over logical channels.

The RLC layer performs concatenation, segmentation, and reassembly of Radio Link Control Service Data Unit (RLC SDU). In order to ensure diverse quality of service (QoS) required by a radio bearer (RB), the RLC layer provides three types of operation modes, e.g., a transparent mode (TM), an unacknowledged mode (UM), and an acknowledged mode (AM). An AM RLC provides error correction through an automatic repeat request (ARQ).

A radio resource control (RRC) layer is defined only in the control plane. The RRC layer serves to control the logical channel, the transport channel, and the physical channel in association with configuration, reconfiguration and release of RBs. The RB is a logical path provided by the first layer (e.g., the physical layer or the PHY layer) and the second layer (e.g., a MAC layer, an RLC layer, a packet data convergence protocol (PDCP) layer, and a service data adaptation protocol (SDAP) layer) for data delivery between the UE and the network.

Functions of a packet data convergence protocol (PDCP) layer in the user plane include user data delivery, header compression, and ciphering. Functions of a PDCP layer in the control plane include control-plane data delivery and ciphering/integrity protection.

A service data adaptation protocol (SDAP) layer is defined only in a user plane. The SDAP layer performs mapping between a Quality of Service (QoS) flow and a data radio bearer (DRB) and QoS flow ID (QFI) marking in both DL and UL packets.

The configuration of the RB implies a process for specifying a radio protocol layer and channel properties to provide a particular service and for determining respective detailed parameters and operations. The RB can be classified into two types, e.g., a signaling RB (SRB) and a data RB (DRB). The SRB is used as a path for transmitting an RRC message in the control plane. The DRB is used as a path for transmitting user data in the user plane.

When an RRC connection is established between an RRC layer of the UE and an RRC layer of the E-UTRAN, the UE is in an RRC_CONNECTED state, and, otherwise, the UE may be in an RRC_IDLE state. In case of the NR, an RRC_INACTIVE state is additionally defined, and a UE being in the RRC_INACTIVE state may maintain its connection with a core network whereas its connection with the BS is released.

Data is transmitted from the network to the UE through a downlink transport channel. Examples of the downlink transport channel include a broadcast channel (BCH) for transmitting system information and a downlink-shared channel (SCH) for transmitting user traffic or control messages. Traffic of downlink multicast or broadcast services or the control messages can be transmitted on the downlink-SCH or an additional downlink multicast channel (MCH). Data is transmitted from the UE to the network through an uplink transport channel. Examples of the uplink transport channel include a random access channel (RACH) for transmitting an initial control message and an uplink SCH for transmitting user traffic or control messages.

Examples of logical channels belonging to a higher channel of the transport channel and mapped onto the transport channels include a broadcast channel (BCCH), a paging control channel (PCCH), a common control channel (CCCH), a multicast control channel (MCCH), a multicast traffic channel (MTCH), etc.

In the NR, a radio frame may be used for performing uplink and downlink transmission. A radio frame has a length of 10ms and may be defined to be configured of two half-frames (HFs). A half-frame may include five 1ms subframes (SFs). A subframe (SF) may be spread into one or more slots, and the number of slots within a subframe may be determined based on subcarrier spacing (SCS). Each slot may include 12 or 14 OFDM(A) symbols according to a cyclic prefix (CP).

In case of using a normal CP, each slot may include 14 symbols. In case of using an extended CP, each slot may include 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following Table 2 shows the number of symbols per slot (N^{slot}_{symb}), the number of slots per frame (N^{frame,u}ₛₗₒₜ), and the number of slots per subframe (N^{subframe,u}ₛₗₒₜ), according to an SCS configuration (u), when Normal CP or Extended CP is used.

**[Table 2]**

| CP Type | SCS (15*2^{u}) | N^{slot}_{symb} | N^{frame,u}ₛₗₒₜ | N^{subframe,u}ₛₗₒₜ |
|---|---|---|---|---|
| Normal CP | 15kHz (u=0) | 14 | 10 | 1 |
| | 30kHz (u=1) | 14 | 20 | 2 |
| | 60kHz (u=2) | 14 | 40 | 4 |
| | 120kHz (u=3) | 14 | 80 | 8 |
| | 240kHz (u=4) | 14 | 160 | 16 |
| Extended CP | 60kHz (u=2) | 12 | 40 | 4 |

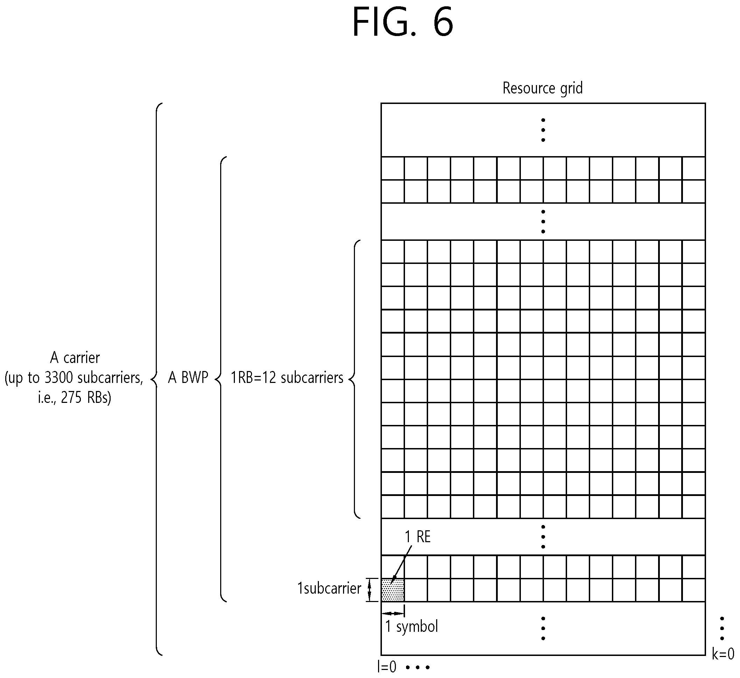

FIG. 6 shows a structure of a slot of a frame, based on an embodiment of the present disclosure. The embodiment of FIG. 6 may be combined with various embodiments of the present disclosure.

Referring to FIG. 6, a slot includes a plurality of symbols in a time domain.

A carrier may include a maximum of N number BWPs (e.g., 5 BWPs). Data communication may be performed via an activated BWP. Each element may be referred to as a Resource Element (RE) within a resource grid and one complex symbol may be mapped to each element.

The BWP may be a set of consecutive physical resource blocks (PRBs) in a given numerology. The PRB may be selected from consecutive sub-sets of common resource blocks (CRBs) for the given numerology on a given carrier

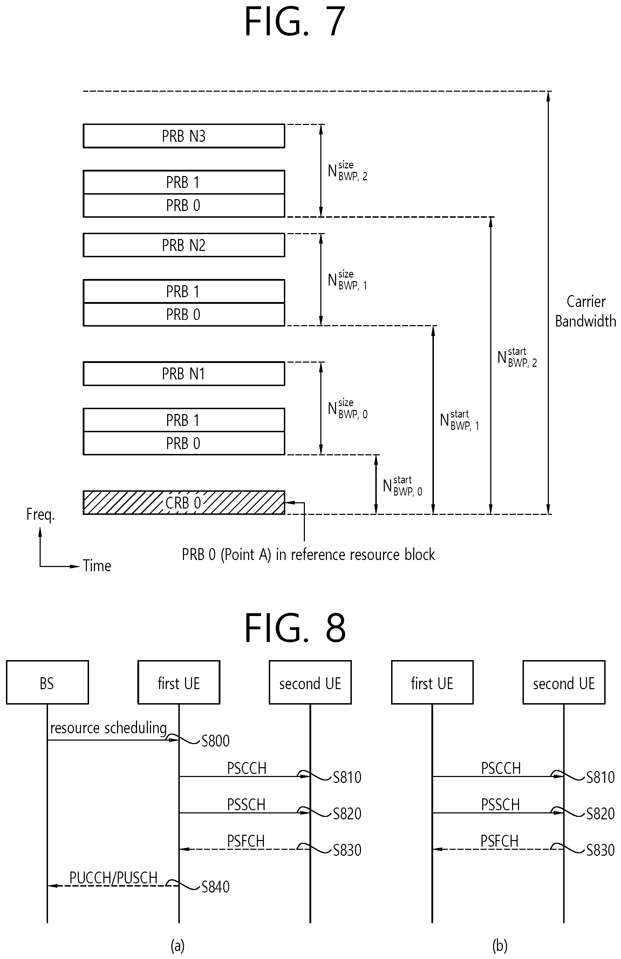

FIG. 7 shows an example of a BWP, based on an embodiment of the present disclosure. The embodiment of FIG. 7 may be combined with various embodiments of the present disclosure. It is assumed in the embodiment of FIG. 7 that the number of BWPs is 3.

Referring to FIG. 7, a common resource block (CRB) may be a carrier resource block numbered from one end of a carrier band to the other end thereof. In addition, the PRB may be a resource block numbered within each BWP. A point A may indicate a common reference point for a resource block grid.

The BWP may be configured by a point A, an offset N^{start}_{BWP} from the point A, and a bandwidth N^{size}_{BWP}. For example, the point A may be an external reference point of a PRB of a carrier in which a subcarrier 0 of all numerologies (e.g., all numerologies supported by a network on that carrier) is aligned. For example, the offset may be a PRB interval between a lowest subcarrier and the point A in a given numerology. For example, the bandwidth may be the number of PRBs in the given numerology.

A sidelink synchronization signal (SLSS) may include a primary sidelink synchronization signal (PSSS) and a secondary sidelink synchronization signal (SSSS), as an SL-specific sequence. The PSSS may be referred to as a sidelink primary synchronization signal (S-PSS), and the SSSS may be referred to as a sidelink secondary synchronization signal (S-SSS). For example, length-127 M-sequences may be used for the S-PSS, and length-127 gold sequences may be used for the S-SSS. For example, a UE may use the S-PSS for initial signal detection and for synchronization acquisition. For example, the UE may use the S-PSS and the S-SSS for acquisition of detailed synchronization and for detection of a synchronization signal ID.

A physical sidelink broadcast channel (PSBCH) may be a (broadcast) channel for transmitting default (system) information which must be first known by the UE before SL signal transmission/reception. For example, the default information may be information related to SLSS, a duplex mode (DM), a time division duplex (TDD) uplink/downlink (UL/DL) configuration, information related to a resource pool, a type of an application related to the SLSS, a subframe offset, broadcast information, or the like. For example, for evaluation of PSBCH performance, in NR V2X, a payload size of the PSBCH may be 56 bits including 24-bit cyclic redundancy check (CRC).

The S-PSS, the S-SSS, and the PSBCH may be included in a block format (e.g., SL synchronization signal (SS)/PSBCH block, hereinafter, sidelink-synchronization signal block (S-SSB)) supporting periodical transmission. The S-SSB may have the same numerology (e.g., SCS and CP length) as a physical sidelink control channel (PSCCH)/physical sidelink shared channel (PSSCH) in a carrier, and a transmission bandwidth may exist within a (pre-)configured sidelink (SL) BWP. For example, the S-SSB may have a bandwidth of 11 resource blocks (RBs). For example, the PSBCH may exist across 11 RBs. In addition, a frequency position of the S-SSB may be (pre-)configured. Accordingly, the UE does not have to perform hypothesis detection at frequency to discover the S-SSB in the carrier.

In the present disclosure, PSCCH may be replaced with a control channel, a physical control channel, a control channel related to sidelink, a physical control channel related to sidelink, an inter-device physical control channel, or the like. In the present disclosure, PSSCH may be replaced with a shared channel, a physical shared channel, a shared channel related to sidelink, a physical shared channel related to sidelink, an inter-device physical shared channel, or the like. For example, SL communication may be replaced with inter-device communication. For example, in terms referring to various channels and/or signals related to SL communication, the SL portion may be replaced with "inter-device".

In the present disclosure, PUCCH may be replaced with a control channel, a physical control channel, a control channel related to uplink, a physical control channel related to uplink, a device-to-base station physical control channel, a UE-to-base station physical control channel, or the like. In the present disclosure, PUSCH may be replaced with a shared channel, a physical shared channel, a shared channel related to uplink, a physical shared channel related to uplink, a device-to-base station physical shared channel, a UE-to-base station physical shared channel, or the like. For example, UL communication may be replaced with UE-to-base station communication or device-to-base station communication. For example, in terms referring to various channels and/or signals related to UL communication, the UL portion may be replaced with "device-to-base station" or "UE-to-base station".

In the present disclosure, PDCCH may be replaced with a control channel, a physical control channel, a control channel related to downlink, a physical control channel related to downlink, a base station-to-device physical control channel, a base station-to-UE physical control channel, or the like. In the present disclosure, PDSCH may be replaced with a shared channel, a physical shared channel, a shared channel related to downlink, a physical shared channel related to downlink, a base station-to-device physical shared channel, a base station-to-UE physical shared channel, or the like. For example, DL communication may be replaced with base station-to-device communication or base station-to-UE communication. For example, in terms referring to various channels and/or signals related to DL communication, the DL portion may be replaced with "base station-to-device" or "base station-to-UE".

FIG. 8 shows a procedure of performing V2X or SL communication by a UE based on a resource allocation mode, based on an embodiment of the present disclosure. The embodiment of FIG. 8 may be combined with various embodiments of the present disclosure.

Referring to (a) of FIG. 8, in resource allocation mode 1, a base station may schedule SL resource(s) to be used by a UE for SL transmission. For example, in step S800, a base station may transmit information related to SL resource(s) and/or information related to UL resource(s) to a first UE. For example, the UL resource(s) may include PUCCH resource(s) and/or PUSCH resource(s). For example, the UL resource(s) may be resource(s) for reporting SL HARQ feedback to the base station.

For example, the first UE may receive information related to dynamic grant (DG) resource(s) and/or information related to configured grant (CG) resource(s) from the base station. For example, the CG resource(s) may include CG type 1 resource(s) or CG type 2 resource(s). In the present disclosure, the DG resource(s) may be resource(s) configured/allocated by the base station to the first UE through a downlink control information (DCI). In the present disclosure, the CG resource(s) may be (periodic) resource(s) configured/allocated by the base station to the first UE through a DCI and/or an RRC message. For example, in the case of the CG type 1 resource(s), the base station may transmit an RRC message including information related to CG resource(s) to the first UE. For example, in the case of the CG type 2 resource(s), the base station may transmit an RRC message including information related to CG resource(s) to the first UE, and the base station may transmit a DCI related to activation or release of the CG resource(s) to the first UE.

In step S810, the first UE may transmit a PSCCH (e.g., sidelink control information (SCI) or 1^{st}-stage SCI) to a second UE based on the resource scheduling. In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE. For example, HARQ feedback information (e.g., NACK information or ACK information) may be received from the second UE through the PSFCH. In step S840, the first UE may transmit/report HARQ feedback information to the base station through the PUCCH or the PUSCH. For example, the HARQ feedback information reported to the base station may be information generated by the first UE based on the HARQ feedback information received from the second UE. For example, the HARQ feedback information reported to the base station may be information generated by the first UE based on a pre-configured rule. For example, the DCI may be DCI for scheduling of SL.

Referring to (b) of FIG. 8, in resource allocation mode 2, a UE may determine SL transmission resource(s) within SL resource(s) configured by a base station/network or pre-configured SL resource(s). For example, the configured SL resource(s) or the pre-configured SL resource(s) may be a resource pool. For example, the UE may autonomously select or schedule resource(s) for SL transmission. For example, the UE may perform SL communication by autonomously selecting resource(s) within the configured resource pool. For example, the UE may autonomously select resource(s) within a selection window by performing a sensing procedure and a resource (re)selection procedure. For example, the sensing may be performed in a unit of subchannel(s). For example, in step S810, a first UE which has selected resource(s) from a resource pool by itself may transmit a PSCCH (e.g., sidelink control information (SCI) or 1^{st}-stage SCI) to a second UE by using the resource(s). In step S820, the first UE may transmit a PSSCH (e.g., 2^{nd}-stage SCI, MAC PDU, data, etc.) related to the PSCCH to the second UE. In step S830, the first UE may receive a PSFCH related to the PSCCH/PSSCH from the second UE.

Referring to (a) or (b) of FIG. 8, for example, the first UE may transmit a SCI to the second UE through the PSCCH. Alternatively, for example, the first UE may transmit two consecutive SCIs (e.g., 2-stage SCI) to the second UE through the PSCCH and/or the PSSCH. In this case, the second UE may decode two consecutive SCIs (e.g., 2-stage SCI) to receive the PSSCH from the first UE. In the present disclosure, a SCI transmitted through a PSCCH may be referred to as a 1^{st} SCI, a first SCI, a 1^{st}-stage SCI or a 1^{st}-stage SCI format, and a SCI transmitted through a PSSCH may be referred to as a 2^{nd} SCI, a second SCI, a 2^{nd}-stage SCI or a 2^{nd}-stage SCI format.

Referring to (a) or (b) of FIG. 8, in step S830, the first UE may receive the PSFCH. For example, the first UE and the second UE may determine a PSFCH resource, and the second UE may transmit HARQ feedback to the first UE using the PSFCH resource.

Referring to (a) of FIG. 8, in step S840, the first UE may transmit SL HARQ feedback to the base station through the PUCCH and/or the PUSCH.

Hereinafter, non-terrestrial network (e.g., NTN; non-terrestrial network) communication is described.

A non-terrestrial network (e.g., NTN) may refer to a network or a part of a network that uses radio frequency resources and is mounted on a satellite (or an unmanned aerial system (e.g., UAS) platform).

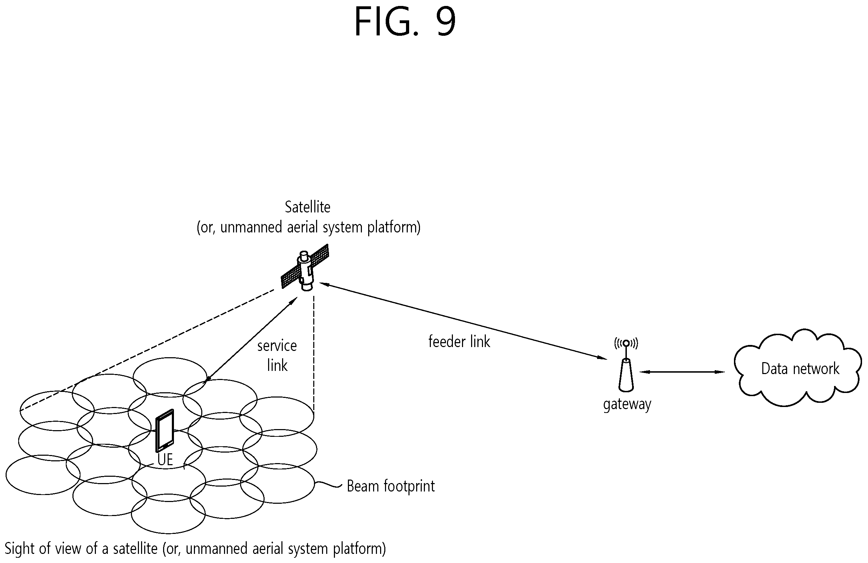

FIG. 9 shows a transparent payload-based scenario of a non-terrestrial network according to an embodiment of the present disclosure. The embodiment of FIG. 9 may be combined with various embodiments of the present disclosure.

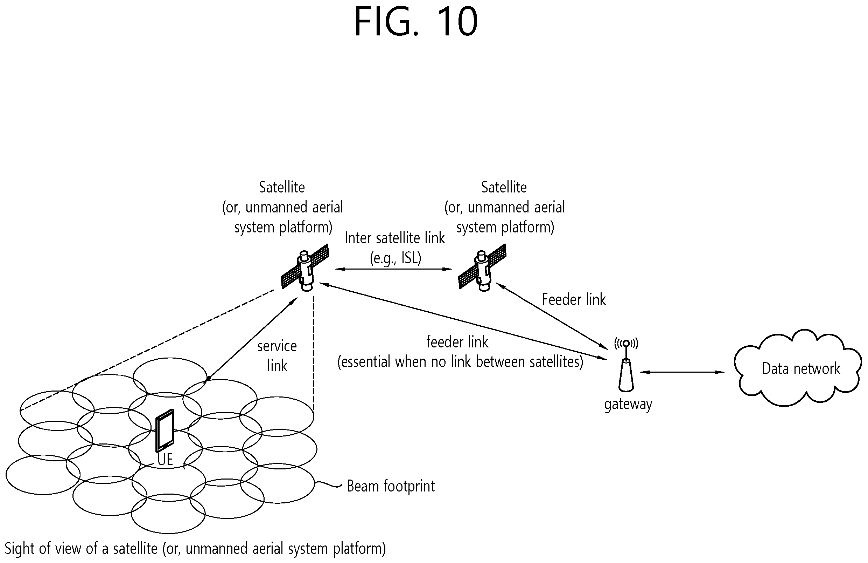

FIG. 10 shows a regenerative payload-based scenario of a non-terrestrial network according to an embodiment of the present disclosure. The embodiment of FIG. 10 may be combined with various embodiments of the present disclosure.

Referring to FIG. 9 and FIG. 10, a satellite (or an unmanned aerial system (e.g., UAS) platform), a UE within a field of view of the satellite (or an unmanned aerial system (e.g., UAS) platform), a beam footprint within a field of view of the satellite (or an unmanned aerial system (e.g., UAS) platform), a feeder link between the satellite (or an unmanned aerial system (e.g., UAS) platform) and a gateway, and a data network described in the present disclosure are shown. A scenario in which a non-terrestrial network (e.g., NTN) related to the corresponding elements provides access to the UE is described below.

For example, a non-terrestrial network (e.g., NTN) may include the following characteristics.
1. one or more satellite-gateways connecting a non-terrestrial network (e.g., NTN) and a public data network

For example, a GEO satellite may be served by one or more satellite-gateways deployed in a satellite target coverage area (e.g., regional or continental coverage). For example, it may be assumed that a UE within a cell is served by only one satellite-gateway.

For example, a non-GEO satellite for which one or more satellite-gateways provide service at a time. For example, the system may continuously ensure service and feeder link continuity between serving satellite-gateways for a sufficient period of time to perform mobility anchoring and handover.
2. a feeder link or a radio link between a satellite-gateway and a satellite (or an unmanned aerial system (e.g., UAS) platform)
3. a feeder link or a radio link between a UE and a satellite (or an unmanned aerial system (e.g., UAS) platform)
4. A satellite (or an unmanned aerial system (e.g., UAS) platform) capable of implementing a transparent or regenerative (including onboard processing) payload. For example, a beam generated by the satellite (or the unmanned aerial system (e.g., UAS) platform) may generally generate multiple beams over a service area bounded by a field of view. For example, a beam footprint may generally be elliptical. For example, a field of view of the satellite (or the unmanned aerial system (e.g., UAS) platform) may depend on an onboard antenna diagram and a minimum elevation angle.

For example, in a transparent payload, radio frequency filtering, frequency conversion, and amplification may be performed. Accordingly, a waveform signal repeated by the payload may not be changed.

For example, in a regenerative payload, radio frequency filtering, frequency conversion, and amplification, as well as demodulation/decoding, switching and/or routing, and coding/modulation may be performed. This may be effectively equivalent to mounting all or some of the functions of a base station (e.g., a gNB) on a satellite (or an unmanned aerial system (e.g., UAS) platform).
5. In a case where a plurality of satellites are gathered, optionally, inter-satellite links (e.g., ISLs; inter-satellite links). An onboard regenerative payload on a satellite may be required for this. For example, the inter-satellite links (e.g., ISLs) may operate in a radio frequency (e.g., RF) band or an optical band.
6. Within a target service area, a UE may be served by a satellite (or an unmanned aerial system (e.g., UAS) platform).

According to an embodiment of the present disclosure, various satellites (or unmanned aerial system (e.g., UAS) platforms) as follows may be provided.

**[Table 3]**

| Platforms | Altitude range | Orbit | Typical beam footprint size |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationary Earth Orbit (GEO) satellite | 35 786 km | notional station keeping position fixed in terms of elevation/azimuth with respect to a given earth point | 200 - 3500 km |
| UAS platform (including HAPS) | 8 - 50 km (20 km for HAPS) | | 5 - 200 km |
| High Elliptical Orbit (HEO) satellite | 400 - 50000 km | Elliptical around the earth | 200 - 3500 km |

For example, a geostationary orbit (e.g., GEO) satellite and an unmanned aerial system (e.g., UAS) may be used to provide continental, regional, or local services.

For example, a constellation composed of low Earth orbit (e.g., LEO) satellites and medium Earth orbit (e.g., MEO) satellites may be used to provide services to both the Northern Hemisphere and the Southern Hemisphere. In some cases, the constellation may also cover the entire world, including polar regions. In the latter case, an appropriate orbital inclination, sufficient beam generation, and inter-satellite links may be required.

For example, a non-terrestrial network (e.g., NTN) that provides access to a UE in the following scenarios may be considered.
1. Circular orbiting and notional station keeping platforms.
2. Highest RTD constraint
3. Highest Doppler constraint
4. A transparent and a regenerative payload
5. One ISL case and one without ISL. Regenerative payload is mandatory in the case of inter-satellite links.
6. Fixed or steerable beams resulting respectively in moving or fixed beam foot print on the ground

**[Table 4]**

| | Transparent satellite | Regenerative satellite |
|---|---|---|
| GEO based non-terrestrial access network | Scenario A | Scenario B |
| LEO based non-terrestrial access network: steerable beams | Scenario C1 | Scenario D1 |
| LEO based non-terrestrial access network: the beams move with the satellite | Scenario C2 | Scenario D2 |

**[Table 5]**

| Scenarios | GEO based non-terrestrial access network (Scenario A and B) | LEO based non-terrestrial access network (Scenario C & D) |
|---|---|---|
| Orbit type | notional station keeping position fixed in terms of elevation/azimuth with respect to a given earth point | circular orbiting around the earth |
| Altitude | 35,786 km | 600 km1,200 km |
| Spectrum (service link) | <6 GHz (e.g. 2 GHz) | |
| | >6 GHz (e.g. DL 20 GHz, UL 30 GHz) | |
| Max channel bandwidth capability (service link) | 30 MHz for band < 6 GHz | |
| | 1 GHz for band > 6 GHz | |
| Payload | Scenario A : Transparent (including radio frequency function only) | Scenario C: Transparent (including radio frequency function only) |
| | Scenario B: regenerative (including all or part of RAN functions) | Scenario D: Regenerative (including all or part of RAN functions) |
| Inter-Satellite link (e.g., ISL) | No | Scenario C: No |
| | | Scenario D: Yes/No (Both cases are possible.) |
| Earth-fixed beams | Yes | Scenario C1: Yes (steerable beams), see note 1 |
| | | Scenario C2: No (the beams move with the satellite) |
| | | Scenario D 1: Yes (steerable beams), see note 1 |
| | | Scenario D 2: No (the beams move with the satellite) |
| Max beam foot print size (edge to edge) regardless of the elevation angle | 3500 km (Note 5) | 1000 km |
| Min Elevation angle for both sat-gateway and user equipment | 10° for service link and 10° for feeder link | 10° for service link and 10° for feeder link |
| Max distance between satellite and user equipment at min elevation angle | 40,581 km | 1,932 km (600 km altitude) |
| | | 3,131 km (1,200 km altitude) |
| Max Round Trip Delay (propagation delay only) | Scenario A: 541.46 ms (service and feeder links) | Scenario C: (transparent payload: service and feeder links) |
| | Scenario B: 270.73 ms (service link only) | - 25.77 ms (600km) |
| | | - 41.77 ms (1200km) |
| | | Scenario D: (regenerative payload: service link only) |
| | | - 12.89 ms (600km) |
| | | - 20.89 ms (1200km) |
| Max differential delay within a cell (Note 6) | 10.3 ms | 3.12 ms and 3.18 ms for respectively 600km and 1200km |
| Max Doppler shift (earth fixed user equipment) | 0.93 ppm | 24 ppm (600km)21ppm(1200km) |
| Max Doppler shift variation (earth fixed user equipment) | 0.000 045 ppm/s | 0.27ppm/s (600km)0.13ppm/s(1200km) |
| User equipment motion on the earth | 1200 km/h (e.g. aircraft) | 500 km/h (e.g. high speed train) |
| | | Possibly 1200 km/h (e.g. aircraft) |
| User equipment antenna types | Omnidirectional antenna (linear polarisation), assuming 0 dBi | |
| | Directive antenna (up to 60 cm equivalent aperture diameter in circular polarisation) | |
| User equipment Tx power | Omnidirectional antenna: UE power class 3 with up to 200 mW | |
| | Directive antenna: up to 20 W | |
| User equipment Noise figure | Omnidirectional antenna: 7 dB | |
| | Directive antenna: 1.2 dB | |
| Service link | 3GPP defined New Radio | |
| Feeder link | 3GPP or non-3GPP defined Radio interface | 3GPP or non-3GPP defined Radio interface |

| | | |
|---|---|---|
| NOTE 1: Each satellite has the capability to steer beams towards fixed points on earth using beamforming techniques. This is applicable for a period of time corresponding to the visibility time of the satellite NOTE 2: Max delay variation within a beam (earth fixed user equipment) is calculated based on Min Elevation angle for both gateway and user equipment NOTE 3: Max differential delay within a beam is calculated based on Max beam foot print diameter at nadir NOTE 4: Speed of light used for delay calculation is 299792458 m/s. NOTE 5: The Maximum beam foot print size for GEO is based on current state of the art GEO High Throughput systems, assuming either spot beams at the edge of coverage (low elevation). NOTE 6: The maximum differential delay at cell level has been computed considering the one at beam level for largest beam size. It doesn't preclude that cell may include more than one beam when beam size are small or medium size. However the cumulated differential delay of all beams within a cell will not exceed the maximum differential delay at cell level in the table above. | | |

For example, study results for a non-terrestrial network (e.g., NTN) may be applicable to a GEO scenario as well as to all NGSO scenarios having circular orbits with an altitude of 600 km or higher.

For example, improvements may have been considered to ensure timing and frequency synchronization performance for a UE-to-base station transmission (e.g., a UL transmission), in consideration of wider cell coverage, a longer round-trip time (RTT), and higher Doppler.

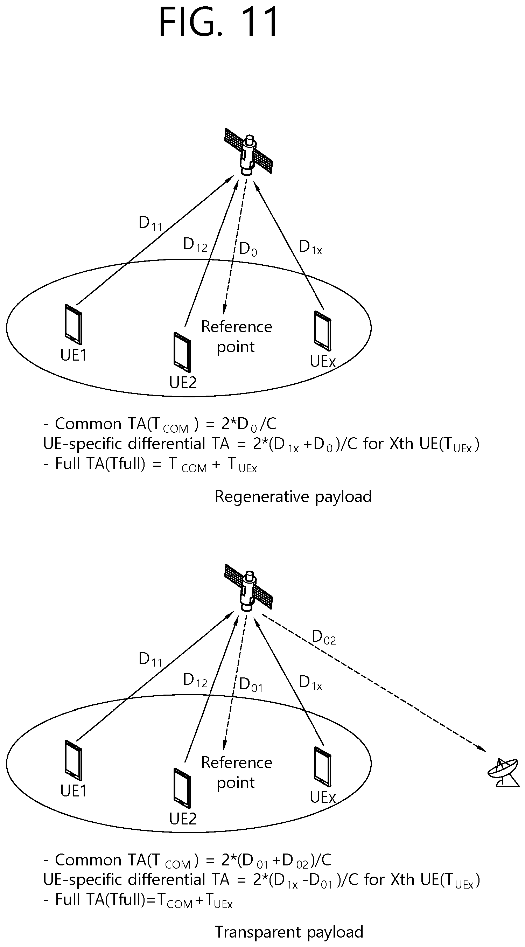

FIG. 11 shows timing advance (TA) components in a non-terrestrial network (e.g., NTN) according to an embodiment of the present disclosure. The embodiment of FIG. 11 may be combined with various embodiments of the present disclosure.

Referring to FIG. 11, TA that may be applied in the case of a regenerative payload and a transparent payload may be shown. For example, in FIG. 11, for simplicity of expression, a TA offset, N_{TAoffset}, is not shown, but this may not be intended to intentionally exclude it.

For example, solutions as follows for timing advance (TA) for initial access and subsequent TA maintenance may be identified together with the terminology definition diagram of FIG. 11.

Option 1: Autonomous obtaining of TA at a UE using a position known to the UE and a satellite orbit known to the UE.

For example, in this case, a TA value required for a UE-to-base station transmission (e.g., a UL transmission), including a physical random access channel (e.g., PRACH), may be calculated by the UE. The adjustment may be performed using a UE-specific differential TA or a full TA (e.g., composed of a UE-specific differential TA and a common TA).

Regarding full TA compensation at the UE side, both alignment between UE-to-base station communication (e.g., UL communication) timing among UEs and base station-to-UE (e.g., DL) and UE-to-base station (e.g., UL) frame timing at the network side may be achieved. However, in the case of a satellite having a transparent payload, further discussion on how to handle an effect due to a feeder link may be scheduled to be performed in standardization work. For example, an additional need for the network to manage a timing offset between base station-to-UE (e.g., DL) and UE-to-base station (e.g., UL) frame timing may be considered when an effect caused by the feeder link is not compensated through corresponding compensation by the UE.

For only a UE-specific differential TA, additional indication for a single reference point may need to be signaled to a UE per beam/cell in order to achieve UL timing alignment among UEs within the same beam/cell coverage. A timing offset between DL frame timing and UL frame timing at the network side may also need to be managed by the network regardless of a satellite payload type.

Due to concerns regarding the accuracy of a TA value autonomously calculated at a UE side, it may be determined in standardization work that, for example, additional TA signaling is transmitted from a network to a UE for TA refinement, such as during initial access and/or TA maintenance.

Option 2: Timing advance adjustment based on network indication.

In this scheme, a common TA representing a common component of propagation delay shared by all UEs within the same satellite beam/cell coverage may be broadcast by the network per satellite beam/cell. Calculation of the common TA may be performed by the network assuming at least one reference point per satellite beam/cell.

Similar to a legacy TA mechanism, indication for a UE-specific differential TA may also be required from the network. For example, expansion of a value range of TA indication in a RAR may have been identified, explicitly or implicitly, in order to satisfy wider coverage of an NTN. Whether to support a negative TA value in the indication may be determined during a standardization stage.

In addition, indication of a timing drift rate from the network to a UE may also be supported, such that TA may be adjusted at the UE side.

When calculating a common TA in the above two options, a single reference point per beam may be considered as a baseline. Whether and how to support multiple reference points may be further discussed in standardization work.

For example, in the case of UE-to-base station communication (e.g., UL communication) frequency compensation, the following solution may be identified in consideration of beam-specific post-compensation of a common frequency offset at the network side, at least for a LEO system:
1. Estimation and pre-compensation of a UE-specific frequency offset may both be performed at the UE side. Obtaining of the value may be performed using a base station-to-UE (e.g., DL) reference signal, a UE position, and a satellite orbit.
2. At least in a LEO system, a frequency offset required for UL frequency compensation may be indicated to a UE by a network. Obtaining of the value may be performed by detecting a UE-to-base station (e.g., UL) signal (e.g., a preamble) at the network side.

In a case where frequency offset compensation is performed by the network in the uplink and/or the downlink, respectively, indication of a frequency offset value compensated by the network may also be supported. However, indication of a Doppler drift rate may not be required.

Detailed signal design for the above improvements may be determined in standardization work.

According to an embodiment of the present disclosure, there may be disabling of feedback (e.g., HARQ feedback) in an NR non-terrestrial network as a delay-robust retransmission mechanism, or optimization of feedback (e.g., HARQ feedback) in an NR non-terrestrial network (e.g., NTN).

A feedback (e.g., HARQ feedback) round-trip time in NR may be on the order of several milliseconds. A propagation delay in a non-terrestrial network (e.g., NTN) may be much longer, ranging from several milliseconds to several hundreds of milliseconds depending on a satellite orbit. A feedback (e.g., HARQ feedback) round-trip time (e.g., RTT) may be much longer in a non-terrestrial network (e.g., NTN).

If UE-to-base station feedback (e.g., UL HARQ feedback) is disabled, a problem may occur when (i) a UE does not receive a MAC CE and an RRC signal, or (ii) a UE does not receive a base station-to-UE packet (e.g., a DL packet) for a long period of time without a base station (e.g., gNB) being aware of it.

For example, when feedback (e.g., HARQ feedback) is disabled, the following matters may need to be discussed.
1. Indication of disabling feedback (e.g., HARQ feedback) through base station-to-UE control information (e.g., DCI) in a new/reinterpreted field
2. New UE-to-base station control information (e.g., UCI) feedback for reporting a base station-to-UE transmission (e.g., a DL transmission) or requesting a change in base station-to-UE (e.g., DL) scheduling

The following improvements for slot aggregation or blind repetition may be considered.
1. Slot aggregation of 8 slots or more
2. Time-interleaved slot aggregation
3. New modulation and coding scheme (e.g., MCS) table

According to an embodiment of the present disclosure, a solution for avoiding a reduction in a peak data rate of a non-terrestrial network (e.g., NTN) may be provided. For example, the solution may be to increase the number of feedback processes (e.g., HARQ processes) according to an increase in a satellite round-trip delay in order to avoid stop-and-wait in a feedback (e.g., HARQ feedback) procedure. For example, the solution may be to disable UE-to-base station feedback (e.g., UL HARQ feedback) and rely on RLC ARQ for reliability in order to avoid stop-and-wait in a feedback (e.g., HARQ feedback) procedure.

For example, the following two options may be considered.

Option 1: Maintaining 16 feedback process (e.g., HARQ process) IDs, and relying on RLC ARQ for a feedback process (e.g., HARQ process) for which UE-to-base station feedback (e.g., HARQ feedback) is disabled through RRC.

Option 2: 16 or more feedback process (e.g., HARQ process) IDs, for which UE-to-base station feedback (e.g., HARQ feedback) is enabled through RRC, considering maintaining 16 or more feedback process (e.g., HARQ process) IDs and a 4-bit feedback process (e.g., HARQ process) ID field in base station-to-UE control information (e.g., DCI).

For example, when a 4-bit feedback process (e.g., HARQ process) ID field in base station-to-UE control information (e.g., DCI) is maintained, the following solution may be considered for 16 or more feedback process (e.g., HARQ process) IDs.
1. Slot number-based solution
2. Virtual process IDs based on a feedback (e.g., HARQ feedback)-based retransmission timing restriction
3. A solution for reusing feedback process (e.g., HARQ process) IDs within an RTD (time window)
4. A solution for reinterpreting an existing base station-to-UE control information (e.g., DCI) field through assistance information from a higher layer.
5. A solution for increasing a feedback process (e.g., HARQ process) ID field to 4 bits or more

The following options may be considered regarding feedback (e.g., HARQ feedback) enhancement for soft buffer management and reduction of stop-and-wait time.
Option 1: Reducing stop-and-wait time through pre-active/pre-emptive feedback (e.g., HARQ feedback)
Option 2: Enabling/disabling use of a feedback buffer (e.g., a HARQ buffer) configurable per UE and feedback process (e.g., HARQ process)
Option 3: Reporting of a feedback buffer (e.g., a HARQ buffer) status from a UE

For example, the number of feedback processes (e.g., HARQ processes) with additional considerations for feedback (e.g., HARQ feedback), a feedback buffer (e.g., a HARQ buffer) size, RLC feedback, and an RLC ARQ buffer size may be further discussed.

According to an embodiment of the present disclosure, use of an NR non-terrestrial network (e.g., NTN) service or an LTE non-terrestrial network (e.g., NTN) service may be considered in order to secure wider coverage or provide a wireless communication service in a place where installation of a wireless communication base station is not easy.

For example, while an NR service, an LTE service, and the like, which are conventional terrestrial network (e.g., TN; terrestrial network) services, provide wireless communication services to UEs by installing a corresponding base station on the ground, a non-terrestrial network (e.g., NTN) service may refer to providing wireless communication services to UEs by installing a base station at a location that is not on the ground, including a satellite (e.g., a geostationary orbit satellite, a low Earth orbit satellite, a medium Earth orbit satellite, etc.), an airplane, an unmanned airship, and a drone, instead of installing the base station on the ground. For example, the non-terrestrial network (e.g., NTN) may also include scenarios such as a HAPS (high altitude platform station) and ATG (air to ground), etc.

For example, in the case of a non-terrestrial network (e.g., NTN), a frequency division multiplexing technique may mainly be considered. This may not completely exclude a time division multiplexing technique. For example, in a non-terrestrial network (e.g., NTN), it may be assumed that a UE has GNSS capability.

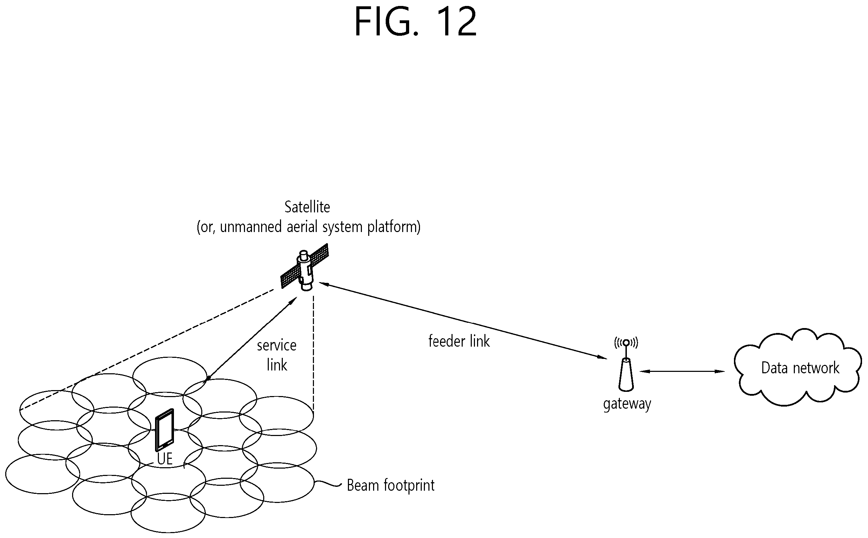

FIG. 12 shows components of a non-terrestrial network (e.g., NTN) with a transparent payload according to an embodiment of the present disclosure. The embodiment of FIG. 12 may be combined with various embodiments of the present disclosure.

A non-terrestrial network (e.g., NTN) platform (particularly, a satellite) may be broadly divided into a transparent payload (FIG. 12) and a regenerative payload according to a characteristic of a payload.

For example, in a transparent payload, functions such as radio frequency filtering, frequency conversion, and amplification may be performed, and therefore, a waveform signal of a transmission payload may not be changed.

On the other hand, for example, in the case of a regenerative payload, functions of frequency filtering, frequency conversion, and amplification, as well as demodulation/decoding, switching and/or routing, and coding/modulation, may also be performed. Accordingly, it may be considered that all or some of the functions of a base station are mounted on a satellite.

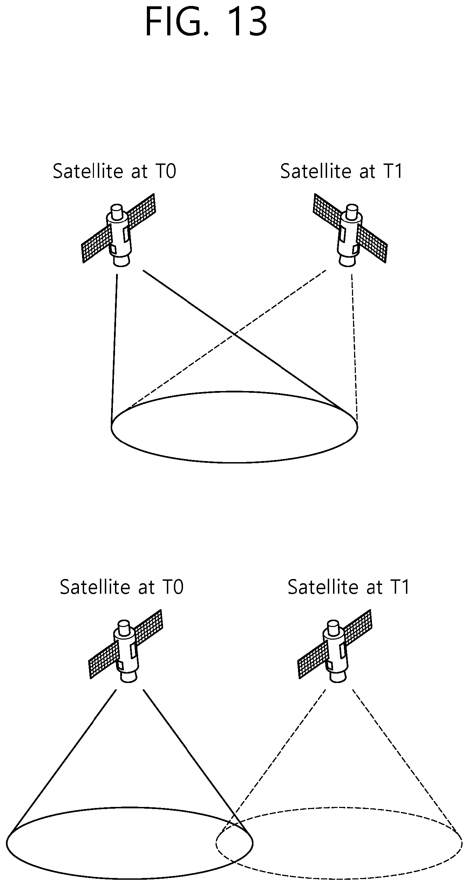

FIG. 13 shows an Earth-fixed cell or an Earth-moving cell according to an embodiment of the present disclosure. The embodiment of FIG. 13 may be combined with various embodiments of the present disclosure.

Referring to FIG. 13, according to a type of a cell supported by a satellite, the cell may be divided into an Earth-fixed cell (or beam) and an Earth-moving cell (or beam).

For example, in the case of an Earth-fixed cell, it may refer to a cell being maintained permanently or for a specific service time within a location on a specific surface of the Earth, based on a beam adjusting function of a satellite.

For example, in the case of an Earth-fixed cell, it may refer to a cell being maintained permanently or for a specific service time within a location on a specific surface of the Earth, based on a beam adjusting function of a satellite.

Frequency bands considered for an NR non-terrestrial network (e.g., NTN) service may mainly include, in a band of 6 GHz or less, a 2 GHz band (L-band: 1-2 GHz, S-band: 2-4 GHz), and, in a band of 6 GHz or more, a 20 GHz band for base station-to-UE communication (e.g., DL communication) and a 30 GHz band for UE-to-base station communication (e.g., UL communication) (Ka-band: 26.5-40 GHz). For example, the following bands may be used as bands for a non-terrestrial network (e.g., NTN).

### 1. S-band (n256)

UE-to-base station communication (e.g., UL communication): 1980-2010MHz
base station-to-UE communication (e.g., DL communication): 2170-2200 MHz

### 2. L-band (n255)

UE-to-base station communication (e.g., UL communication): 1626.5-1660.5MHz
base station-to-UE communication (e.g., DL communication): 1525-1559MHz

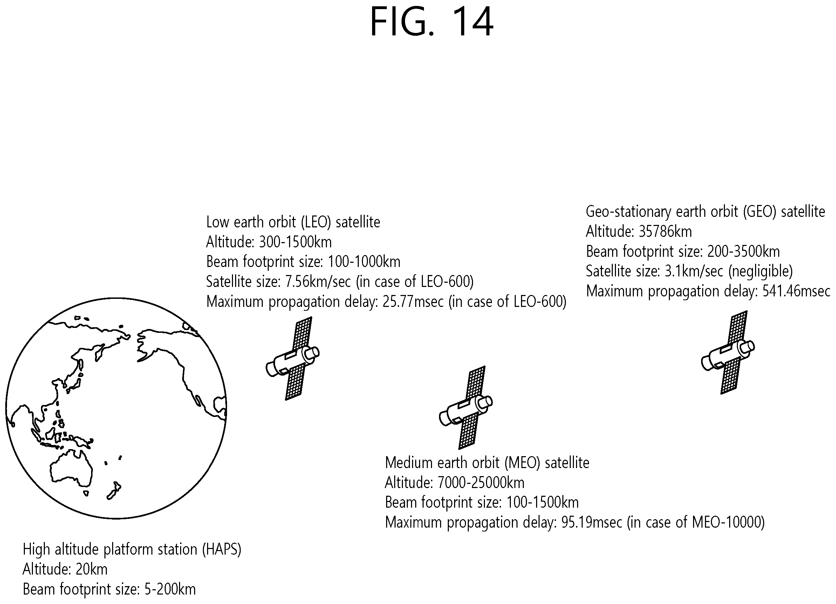

FIG. 14 shows characteristic differences according to a non-terrestrial network (e.g., NTN), according to an embodiment of the present disclosure. The embodiment of FIG. 14 may be combined with various embodiments of the present disclosure.

Referring to FIG. 14, an altitude of a high altitude platform station (HAPS; high altitude platform station) may be 20 km, and a beam footprint size may be 5-200 km.

For example, an altitude of a low Earth orbit (LEO; low Earth orbit) satellite may be 300-1500 km, a beam footprint size may be 100-1000 km, a satellite speed may be 7.56 km/sec (in the case of LEO-600), and a maximum propagation delay may be 25.77 msec (in the case of LEO-600).

For example, an altitude of a medium Earth orbit (MEO; medium Earth orbit) satellite may be 7000-25000 km, a beam footprint size may be 100-1500 km, and a maximum propagation delay may be 95.19 msec (in the case of MEO-10000).

For example, an altitude of a geostationary Earth orbit (GEO; geo-stationary Earth orbit) satellite may be 35786 km, a beam footprint size may be 200-3500 km, a satellite speed may be 3.1 km/sec (negligible), and a maximum propagation delay may be 541.46 msec.

A maximum round trip delay for each scenario of a non-terrestrial network (e.g., NTN) may be as shown in the table below.

**[Table 6]**

| Scenarios | GEO based non-terrestrial access network (Scenario A and B) | LEO based non-terrestrial access network (Scenario C & D) |
|---|---|---|
| Orbit type | notional station keeping position fixed in terms of elevation/azimuth with respect to a given earth point | circular orbiting around the earth |
| Altitude | 35,786 km | 600 km1,200 km |
| Max beam foot print size (edge to edge) regardless of the elevation angle | 3500 km (Note 5) | 1000 km |
| Min Elevation angle for both sat-gateway and user equipment | 10° for service link and 10° for feeder link | 10° for service link and 10° for feeder link |
| Max distance between satellite and user equipment at min elevation angle | 40,581 km | 1,932 km (600 km altitude) |
| | | 3,131 km (1,200 km altitude) |
| Max Round Trip Delay (propagation delay only) | | Scenario C: (transparent payload: service and feeder links) |
| | | - 25.77 ms (600km) |
| | Scenario A: 541.46 ms (service and feeder links) | - 41.77 ms (1200km) |
| | Scenario B: 270.73 ms (service link only) | Scenario D: (regenerative payload: service link only) |
| | | - 12.89 ms (600km) |
| | | - 20.89 ms (1200km) |

As described above, in a non-terrestrial network (e.g., NTN) environment in which a round-trip time (RTT) is very long, K_{offset} and K_{mac}, which are scheduling offsets, may be introduced in order for communication to be effectively performed.

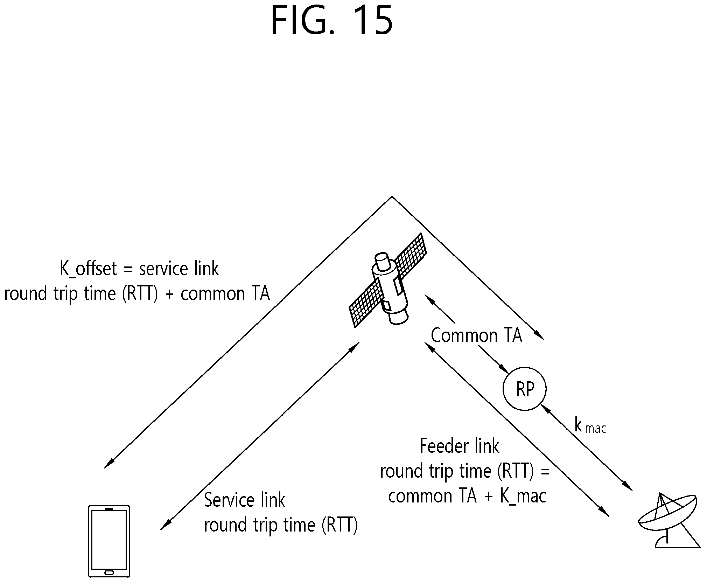

FIG. 15 shows a scheduling offset that may be applied in a non-terrestrial network (e.g., NTN) according to an embodiment of the present disclosure. The embodiment of FIG. 15 may be combined with various embodiments of the present disclosure.

Referring to FIG. 15, K_{offset} and K_{mac}, which are scheduling offsets that may be applied in a non-terrestrial network (e.g., NTN), are shown. Here, K_{offset} may be an offset value indicating a round-trip time (RTT) of a UE-to-base station time synchronization reference point (RP). For example, this may indicate a sum of a service link round-trip time (RTT) and a common TA (if indicated). K_{mac} may be an offset value indicating a round-trip time (RTT) between the RP and a gNB.

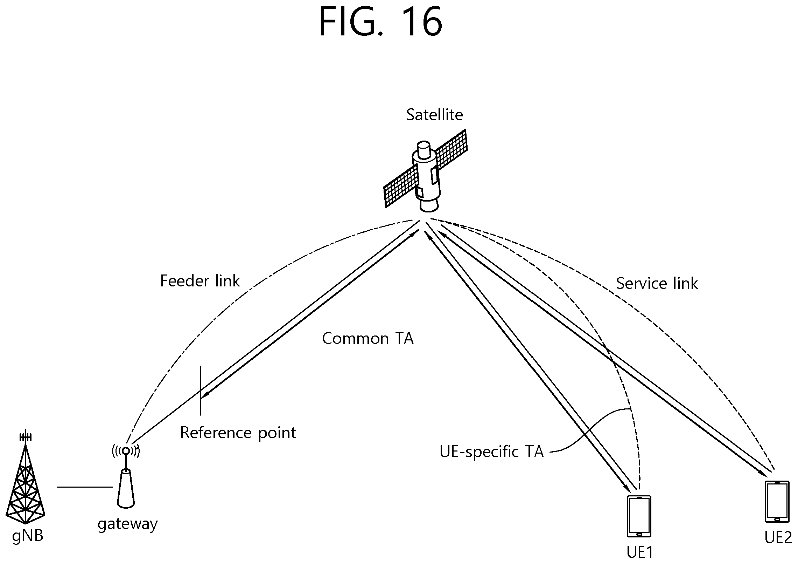

FIG. 16 shows a UE-specific TA and a common TA according to an embodiment of the present disclosure. The embodiment of FIG. 16 may be combined with various embodiments of the present disclosure.

Referring to FIG. 16, a gNB, a satellite, a first UE, and a second UE are shown. In a non-terrestrial network (e.g., NTN), a UE may calculate a timing advance (TA) by itself based on GNSS capability of the UE and base station indication information (e.g., ephemeris information), and this may be referred to as a UE-specific TA.

In addition, a TA calculated based on a common TA parameter indicated by a base station may be referred to as a common TA, and a final TA derived based on the common TA may be as follows.

A UE-to-base station frame number i for a transmission from a UE may start T_{TA} = (N_{TA} + N_{TA,offset} + N^{COMMON}_{TA,adj} + N^{UE}_{TA,adj}) earlier than a start of a corresponding base station-to-UE frame.

In this case, N_{TA} may be 0 for a UE-to-base station physical shared channel (e.g., PUSCH) transmission.

In this case, N^{COMMON}_{TA,adj} may be derived by higher layer parameters TACommon, TACommonDrift, and TACommonDriftVariation, or may be 0.

In this case, N^{UE}_{TA,adj} may be calculated by a UE based on a location of the UE and ephemeris-related higher layer parameters of a serving satellite, or may be 0.

In a non-terrestrial network (e.g., NTN), two ephemeris formats may be supported. For example, contents thereof may be as follows.

### 1. Position and velocity state vector ephemeris format: 132 bits (<17 bytes)

Here, a size of a field for position (x, y, z) (m) may be 78 bits. A size of a field for velocity (vx, vy, vz) (m/s) may be 54 bits.

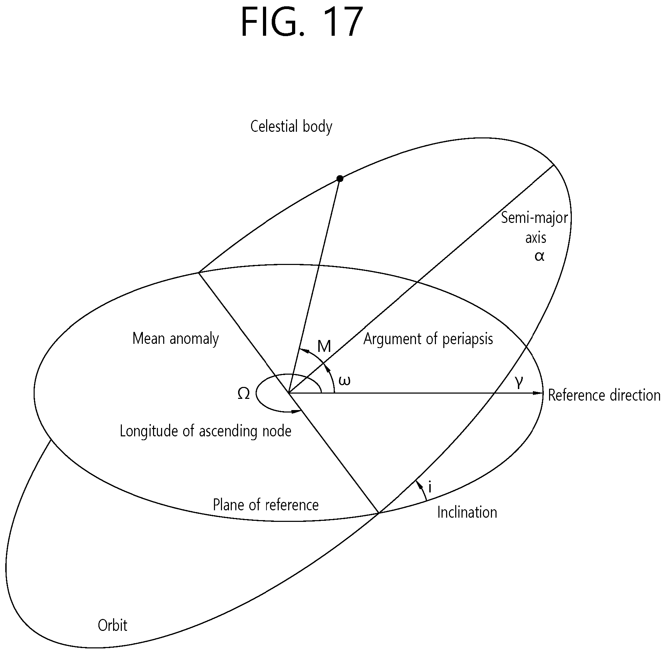

### 2. Orbital parameter ephemeris format: 164 bits (<21 bytes) (see FIG. 17)

Here, a semi-major axis "α" (m) may be 33 bits. An eccentricity "e" may be 20 bits. An argument of periapsis "ω" (rad) may be 28 bits. A longitude of an ascending node "Ω" (rad) may be 28 bits. An inclination "i" (rad) may be 27 bits. A mean anomaly "M" (rad) at each epoch time may be 28 bits.

FIG. 17 shows an orbital parameter ephemeris format according to an embodiment of the present disclosure. The embodiment of FIG. 17 may be combined with various embodiments of the present disclosure.

Referring to FIG. 17, each element of the exemplified orbital parameter ephemeris format is shown.

In satellite-based communication, circular polarization is mainly used in order to increase straightness of propagation, and information regarding which polarization information is used by a satellite may be transmitted to a UE through system information block (SIB; system information block) signaling.

For example, a polarization type of system information block (SIB) signaling that transmits, to a UE, information regarding which polarization information is used by a satellite may include linear polarization, right-hand circular polarization (RHCP; right-hand circular polarization), and left-hand circular polarization (LHCP; left-hand circular polarization).

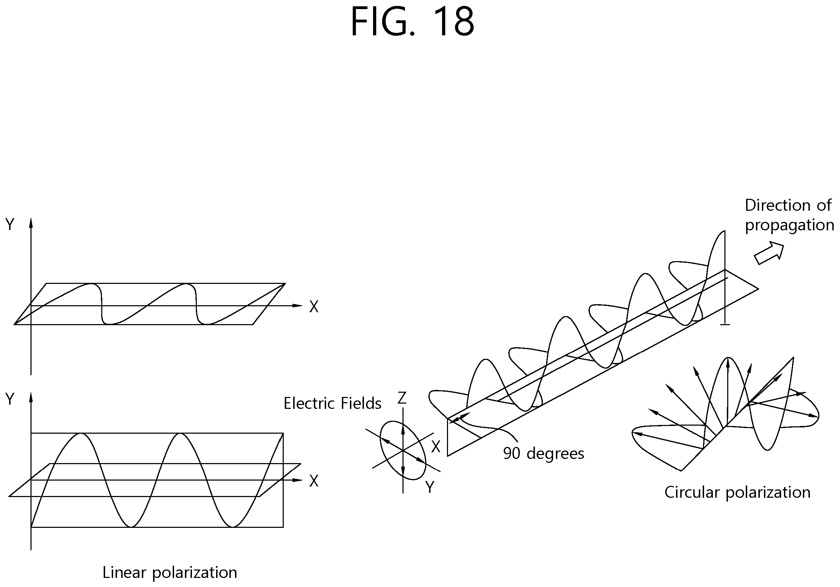

FIG. 18 shows an example of circular polarization according to an embodiment of the present disclosure. The embodiment of FIG. 18 may be combined with various embodiments of the present disclosure.

Referring to FIG. 18, a difference between linear polarization and circular polarization is shown.

For example, hereinafter, a communication channel being transmitted through a candidate may refer to transmission of the communication channel being performed through a candidate resource.

Meanwhile, in a next-generation non-terrestrial network (e.g., NTN) system, effective isotropically radiated power (e.g., EIRP; effective isotropically radiated power) and/or bandwidth (e.g., BW) for a base station-to-UE transmission (e.g., DL transmission) may be limited, and coverage enhancement for a base station-to-UE channel transmission (e.g., DL channel transmission) may be required in the above situation.

Meanwhile, within a non-terrestrial network (e.g., NTN) footprint, cell, or beam, UEs supporting a base station-to-UE communication coverage (e.g., DL coverage) enhancement operation and UEs not supporting a base station-to-UE communication coverage (e.g., DL coverage) enhancement operation may coexist, and therefore, the base station-to-UE communication coverage (e.g., DL coverage) enhancement operation may need to minimize an impact on existing legacy UEs.

In particular, for example, when a base station-to-UE physical control channel transmission (e.g., PDCCH transmission) corresponds to a fallback base station-to-UE control information format (e.g., DCI format) or a common search space (e.g., CSS; common search space), a form of a base station-to-UE communication coverage (e.g., DL coverage) enhancement scheme may include or extend an existing base station-to-UE physical control channel transmission (e.g., PDCCH transmission) scheme.

Whether various embodiments of the present disclosure are applied and a method according thereto may be differently applied per fallback base station-to-UE control information format (e.g., DCI format) and non-fallback base station-to-UE control information format (e.g., DCI format), and/or per base station-to-UE control information format (e.g., DCI format).

Whether various embodiments of the present disclosure are applied and a method according thereto may be differently applied per common search space (e.g., CSS) (all or part of a common search space (e.g., CSS) of Type-0, Type-0A, Type-1, Type-2, and/or Type-3), and user-specific search space (e.g., USS), per control resource set (e.g., CORESET)#0 and non-zero control resource set (e.g., CORESET), per search space, and/or per control resource set (e.g., CORESET).

Whether various embodiments of the present disclosure are applied and a method according thereto may be differently applied per radio network temporary identifier (e.g., RNTI; radio network temporary identifier) for a base station-to-UE physical control channel (e.g., PDCCH), and/or per a purpose of the base station-to-UE physical control channel (e.g., PDCCH) (whether scheduling of a first system information block (e.g., SIB1; system information block 1) is performed and/or whether a direct message is transmitted).

Various embodiments of the present disclosure and/or combinations of the embodiments may be differently applied according to a payload type of a satellite (for example, a regenerative payload or a transparent payload).

Various embodiments of the present disclosure and/or combinations of the embodiments may be differently applied per a type of a non-terrestrial network (e.g., NTN) node (for example, a geostationary orbit (GEO; geostationary orbit), a non-geostationary orbit (NGEO; non-geostationary orbit), a low Earth orbit (LEO; low-Earth orbit), a medium Earth orbit (MEO; medium-Earth orbit), a high altitude platform station (HAPS; high altitude platform station), or a drone), altitude, a fixed beam footprint, or a cell-moving beam footprint.

For example, when a base station-to-UE physical control channel (e.g., PDCCH) (or a base station-to-UE physical control channel transmission (e.g., PDCCH transmission)) is repeated in a time domain and/or a frequency domain, a UE may expect that a multiplexing pattern between a synchronization signal block (e.g., SSB; synchronization signal block) and the base station-to-UE physical control channel (e.g., PDCCH) is a time division multiplexing scheme (e.g., TDM; time division multiplexing), and/or may expect that frequency division multiplexing (e.g., FDM; frequency division multiplexing) is not performed.

And/or, for example, when an aggregation level of a base station-to-UE control information format (e.g., DCI format) for a base station-to-UE physical control channel (e.g., PDCCH) is greater than or equal to a certain level (for example, 16 or 32), a UE may expect that a multiplexing pattern between a synchronization signal block (e.g., SSB) and the base station-to-UE physical control channel (e.g., PDCCH) is a time division multiplexing scheme (e.g., TDM), and/or may expect that frequency division multiplexing (e.g., FDM) is not performed.

And/or, for example, when a coverage enhancement mode for a base station-to-UE physical control channel (e.g., PDCCH) is configured, a UE may expect that a multiplexing pattern between a synchronization signal block (e.g., SSB) and the base station-to-UE physical control channel (e.g., PDCCH) is a time division multiplexing scheme (e.g., TDM), and/or may expect that frequency division multiplexing (e.g., FDM) is not performed.

For example, an advantage thereof may be increasing power of a specific base station-to-UE transmission (e.g., DL transmission) by concentrating power spectral density (PSD; power spectral density) in a narrow band even during a base station-to-UE transmission (e.g., DL transmission).

According to an embodiment of the present disclosure, time and/or frequency resources of a base station-to-UE physical control channel (e.g., PDCCH) candidate set (for example, a candidate resource set for a base station-to-UE physical control channel (e.g., PDCCH) transmission) having an aggregation level of 4, 8, or 16 (at least for control resource set#0 (e.g., CORESET#0) and/or Type-0 common search space (e.g., Type-0 CSS)) may be separated from a base station-to-UE physical control channel (e.g., PDCCH) candidate set (for example, a candidate resource set for a base station-to-UE physical control channel (e.g., PDCCH) transmission) having an aggregation level greater than 16.

For example, a first base station-to-UE physical control channel (e.g., PDCCH) candidate set (for example, a candidate resource set for a base station-to-UE physical control channel (e.g., PDCCH) transmission) having an aggregation level of 4, 8, or 16 (at least for control resource set#0 (e.g., CORESET#0) and/or Type-0 common search space (e.g., Type-0 CSS)) may be in a form of a subset of a base station-to-UE physical control channel (e.g., PDCCH) candidate set (for example, a candidate resource set for a base station-to-UE physical control channel (e.g., PDCCH) transmission) having an aggregation level of 4, 8, 16, or a value greater than 16.

According to an embodiment of the present disclosure, a single base station-to-UE control information format (e.g., DCI format) may be transmitted through a plurality of base station-to-UE physical control channel (e.g., PDCCH) candidates within the same search space and/or the same control resource set (e.g., CORESET). Here, for example, the single base station-to-UE control information format (e.g., DCI format) may be such that the same information is repeatedly transmitted through the plurality of base station-to-UE physical control channel (e.g., PDCCH) candidates.

For example, a UE may be provided with an additional control resource set (e.g., CORESET) and/or search space (e.g., SS) for control resource set (e.g., CORESET)#0 and/or Type-0 common search space (e.g., Type-0 CSS), and/or may transmit a single base station-to-UE control information format (e.g., DCI format) by using a base station-to-UE physical control channel (e.g., PDCCH) candidate in the additional control resource set (e.g., CORESET) and/or search space (e.g., SS) and a base station-to-UE physical control channel (e.g., PDCCH) candidate in control resource set (e.g., CORESET)#0 and/or Type-0 common search space (e.g., Type-0 CSS). Here, for example, the single base station-to-UE control information format (e.g., DCI format) may be such that the same information is repeatedly transmitted through the base station-to-UE physical control channel (e.g., PDCCH) candidates.

For example, whether the additional control resource set (e.g., CORESET) and/or search space (e.g., SS) is configured, and/or information therefor, may be indicated in a physical broadcast channel (e.g., PBCH; physical broadcast channel). For example, whether the additional control resource set (e.g., CORESET) and/or search space (e.g., SS) is configured, and/or information therefor, may be indicated through a physical broadcast channel (e.g., PBCH).

According to an embodiment of the present disclosure, whether base station-to-UE physical control channel (e.g., PDCCH) coverage extension is applied may be indicated through a physical broadcast channel (e.g., PBCH) (particularly, by reusing spare bit(s) in the physical broadcast channel (e.g., PBCH)).

For example, when base station-to-UE physical control channel (e.g., PDCCH) coverage extension is activated for a cell, and/or when the cell supports a base station-to-UE physical control channel (e.g., PDCCH) coverage extension operation for a UE, the UE may assume that a single base station-to-UE control information format (e.g., DCI format) is transmitted through a plurality of base station-to-UE physical control channel (e.g., PDCCH) candidates, and may perform blind detection accordingly.

According to an embodiment of the present disclosure, a single base station-to-UE control information format (e.g., DCI format) may be transmitted (to a UE) through a base station-to-UE physical control channel (e.g., PDCCH) candidate and/or resource element group(s) (e.g., REG(s); resource element group(s)) and/or control channel element(s) (e.g., CCE(s); control channel element(s)) located in different symbols within the same control resource set (e.g., CORESET) and/or search space within N slots.

For example, the value of N may be 1. For example, the value of N may be configured through RRC or may be a value predefined. For example, the value of N may be a value indicated in a physical broadcast channel (e.g., PBCH) and/or a system information block (e.g., SIB). For example, the value of N may be the same value as a duration value of a search space configuration.

The above scheme may be differently applied according to whether it is control resource set#0 (e.g., CORESET#0) and/or whether it is Type-0 common search space (e.g., Type-0 CSS).

For example, the search space configuration may include a plurality of start symbols within a slot, and/or a UE may transmit a single base station-to-UE control information format (e.g., DCI format) through a plurality of base station-to-UE physical control channel (e.g., PDCCH) candidates and/or resource element group(s) (e.g., REG(s)) and/or control channel element(s) (e.g., CCE(s)) corresponding to the same search space within the same slot.

For example, the base station-to-UE physical control channel (e.g., PDCCH) candidates located in the different symbols may be derived based on a start symbol position, a duration, a slot offset, and/or a period provided through a search space configuration.

For example, base station-to-UE physical control channel (e.g., PDCCH) candidates, resource element group(s) (e.g., REG(s)), and/or control channel element(s) (e.g., CCE(s)) of different symbols used for transmitting a single base station-to-UE control information format (e.g., DCI format) may be the same index set. For example, base station-to-UE physical control channel (e.g., PDCCH) candidates, resource element group(s) (e.g., REG(s)), and/or control channel element(s) (e.g., CCE(s)) of different symbols used for transmitting a single base station-to-UE control information format (e.g., DCI format) may be included in a set of the same index.

For example, base station-to-UE physical control channel (e.g., PDCCH) candidates, resource element group(s) (e.g., REG(s)), and/or control channel element(s) (e.g., CCE(s)) of the same symbol used for transmitting a single base station-to-UE control information format (e.g., DCI format) may be adjacent or consecutive to each other in terms of an index. For example, base station-to-UE physical control channel (e.g., PDCCH) candidates, resource element group(s) (e.g., REG(s)), and/or control channel element(s) (e.g., CCE(s)) of the same symbol used for transmitting a single base station-to-UE control information format (e.g., DCI format) may be adjacent or consecutive to each other within a group of the same index.

According to an embodiment of the present disclosure, a UE may receive the single base station-to-UE control information format (e.g., DCI format) received in a first control resource set (e.g., CORESET) and/or a base station-to-UE physical control channel (e.g., PDCCH) monitoring occasion in a symbol or slot right after a last symbol for the base station-to-UE physical control channel (e.g., PDCCH) monitoring occasion, or in a symbol or slot after a certain offset. For example, a UE may receive the same base station-to-UE control information format (e.g., DCI format) as the single base station-to-UE control information format (e.g., DCI format) received in a first control resource set (e.g., CORESET) and/or a base station-to-UE physical control channel (e.g., PDCCH) monitoring occasion in a symbol or slot right after a last symbol for the base station-to-UE physical control channel (e.g., PDCCH) monitoring occasion, or in a symbol or slot after a certain offset.

For example, the repetition may be repeated multiple times, and the number of repetitions may be configured through RRC, may be indicated through a MAC control element (e.g., CE; control element), and/or may be indicated in a physical broadcast channel (e.g., PBCH) (whether repetition is performed and/or the number of repetitions). For example, for a Type-0 common search space (e.g., Type-0 CSS) and/or control resource set (e.g., CORESET)#0, the number of repetitions may be predefined. For example, the number of repetitions may be different per aggregation level for a base station-to-UE physical control channel (e.g., PDCCH) candidate.

According to an embodiment of the present disclosure, a scheme in which a single base station-to-UE control information format (e.g., DCI format) is transmitted through a plurality of base station-to-UE physical control channel (e.g., PDCCH) candidates may be a scheme in which complex-valued symbols are mapped in a rate-matching manner, and/or may be a scheme in which mapping and repetition are performed on a base station-to-UE physical control channel (e.g., PDCCH) candidate basis.

In various embodiments of the present disclosure, a scheme in which additional information is indicated through a physical broadcast channel (e.g., PBCH) may be to use a reserved state of controlResourceSetZero and/or a reserved state of searchSpaceZero. For example, when a value of controlResourceSetZero and/or searchSpaceZero indicated through a physical broadcast channel (e.g., PBCH) is a specific value, or according to the value, information for a base station-to-UE physical control channel (e.g., PDCCH) resource according to an indicated value for searchSpaceZero and/or controlResourceSetZero may be differently interpreted.

For example, a number of (all or remaining) base station-to-UE physical control channel (e.g., PDCCH) candidates, a number of symbol groups, and/or a number of slots used for transmitting a single base station-to-UE control information format (e.g., DCI format) may be indicated through the base station-to-UE control information format (e.g., DCI format), and according to the indicated value, a plurality of base station-to-UE physical control channel (e.g., PDCCH) candidates may be transmitted through symbol group and/or slot resources.

Meanwhile, when a single base station-to-UE control information (e.g., DCI) is transmitted through a plurality of base station-to-UE physical control channel (e.g., PDCCH) candidates across different symbol group and/or slot resources, information for a transmission time point and/or a transmission resource of a base station-to-UE signal/channel (for example, a PDSCH, a (CSI-)RS) scheduled through the base station-to-UE control information (e.g., DCI), and information for a transmission time point and/or a transmission resource of a UE-to-base station signal/channel (for example, a physical random access channel (e.g., PRACH; physical random access channel), a UE-to-base station physical shared channel (e.g., PUSCH), a UE-to-base station physical control channel (e.g., PUCCH), a sounding reference signal (e.g., SRS)) scheduled through the base station-to-UE control information (e.g., DCI), may need to be defined.

Meanwhile, understanding of scheduling information between a UE assuming that base station-to-UE control information (e.g., DCI) is transmitted through a single base station-to-UE physical control channel (e.g., PDCCH) candidate and a UE assuming that the base station-to-UE control information (e.g., DCI) is transmitted through a plurality of base station-to-UE physical control channel (e.g., PDCCH) candidates may need to be aligned.

For example, when a single base station-to-UE control information (e.g., DCI) is transmitted through a plurality of base station-to-UE physical control channel (e.g., PDCCH) candidates across different symbol group and/or slot resources, for each base station-to-UE physical control channel (e.g., PDCCH) candidate, a transmission time point and/or a transmission resource of a base station-to-UE signal/channel may be determined based on a symbol group and/or slot in which the corresponding base station-to-UE physical control channel (e.g., PDCCH) candidate is transmitted.

For example, when two base station-to-UE physical control channel (e.g., PDCCH) candidates are used for transmission of a single base station-to-UE control information (e.g., DCI), a base station-to-UE signal/channel may be determined by interpreting the base station-to-UE control information (e.g., DCI) based on a first base station-to-UE physical control channel (e.g., PDCCH) candidate, and/or a base station-to-UE signal/channel may be determined by interpreting the base station-to-UE control information (e.g., DCI) based on a second base station-to-UE physical control channel (e.g., PDCCH) candidate.

For example, the first base station-to-UE physical control channel (e.g., PDCCH) candidate and the second base station-to-UE physical control channel (e.g., PDCCH) candidate may transmit the same base station-to-UE control information (e.g., DCI), and may be mapped to different symbol groups and/or slots, respectively. For example, for the above scheme, it may be necessary to store a soft signal at a related symbol position before obtaining the base station-to-UE control information (e.g., DCI) through radio frequency (e.g., RF; radio frequency) buffering and/or soft buffering at a UE side.

An advantage thereof may be that, even for a UE that obtains the base station-to-UE control information (e.g., DCI) through a single base station-to-UE physical control channel (e.g., PDCCH) candidate with respect to the base station-to-UE control information (e.g., DCI) transmitted through a plurality of base station-to-UE physical control channel (e.g., PDCCH) candidates, information for a base station-to-UE signal/channel scheduled in the base station-to-UE control information (e.g., DCI) may be appropriately obtained.

For example, in the above situation, a base station-to-UE signal/channel may exist between a first base station-to-UE physical control channel (e.g., PDCCH) candidate and a second base station-to-UE physical control channel (e.g., PDCCH) candidate.

According to an embodiment of the present disclosure, when a single base station-to-UE control information (e.g., DCI) is transmitted through a plurality of base station-to-UE physical control channel (e.g., PDCCH) candidates across different symbol groups and/or slot resources, for each base station-to-UE physical control channel (e.g., PDCCH) candidate, a transmission time point and/or a transmission resource of a UE-to-base station signal/channel may be determined based on a slot group and/or slot in which the corresponding base station-to-UE physical control channel (e.g., PDCCH) candidate is transmitted.

For example, when a single base station-to-UE control information (e.g., DCI) is transmitted through a plurality of N base station-to-UE physical control channel (e.g., PDCCH) candidates across different symbol groups and/or slot resources, a number of repetitions of a base station-to-UE signal/channel and/or a UE-to-base station signal/channel scheduled through the base station-to-UE control information (e.g., DCI) may be at least N.

For example, when a single base station-to-UE control information (e.g., DCI) is transmitted through a plurality of base station-to-UE physical control channel (e.g., PDCCH) candidates across different symbol groups and/or slot resources, a transmission time point and/or a transmission resource of a base station-to-UE signal/channel and/or a UE-to-base station signal/channel may be determined based on a slot group and/or slot in which a base station-to-UE physical control channel (e.g., PDCCH) candidate at an earliest time point and/or a latest time point is transmitted.

According to an embodiment of the present disclosure, when a single base station-to-UE control information (e.g., DCI) is transmitted through a plurality of base station-to-UE physical control channel (e.g., PDCCH) candidates across different symbol groups and/or slot resources, a radio network temporary identifier (e.g., RNTI) may be different from that when the single base station-to-UE control information (e.g., DCI) is transmitted through a single base station-to-UE physical control channel (e.g., PDCCH) candidate.

For example, the separate radio network temporary identifier (e.g., RNTI) may be derived in a form in which a specific offset is added to a radio network temporary identifier (e.g., RNTI) used when a single base station-to-UE physical control channel (e.g., PDCCH) candidate is used, and/or may be predefined and/or (pre-)configured.

For example, when a single base station-to-UE control information (e.g., DCI) is transmitted through a plurality of base station-to-UE physical control channel (e.g., PDCCH) candidates across different symbol groups and/or slot resources, a radio network temporary identifier (e.g., RNTI) (or a radio network temporary identifier (e.g., RNTI) type) used for each base station-to-UE physical control channel (e.g., PDCCH) candidate may be different.

For example, a specific base station-to-UE physical control channel (e.g., PDCCH) candidate may use the same radio network temporary identifier (e.g., RNTI) (or a radio network temporary identifier (e.g., RNTI) type) as that used when a single base station-to-UE control information (e.g., DCI) is transmitted through a single base station-to-UE physical control channel (e.g., PDCCH) candidate, and/or another specific base station-to-UE physical control channel (e.g., PDCCH) candidate may use a radio network temporary identifier (e.g., RNTI) (or a radio network temporary identifier (e.g., RNTI) type) having a form different from that used when a single base station-to-UE control information (e.g., DCI) is transmitted through a single base station-to-UE physical control channel (e.g., PDCCH) candidate.

For example, the other specific base station-to-UE physical control channel (e.g., PDCCH) candidate may be mapped to an additional resource for repetition of base station-to-UE control information (e.g., DCI) and/or a base station-to-UE physical control channel (e.g., PDCCH).

Various embodiments of the present disclosure may be differently applied according to transmission content of base station-to-UE control information (e.g., DCI), a base station-to-UE physical control channel (e.g., PDCCH), a base station-to-UE signal/channel, and/or a UE-to-base station signal/channel, and/or according to whether it is dedicated to a specific UE or common to a plurality of UEs.

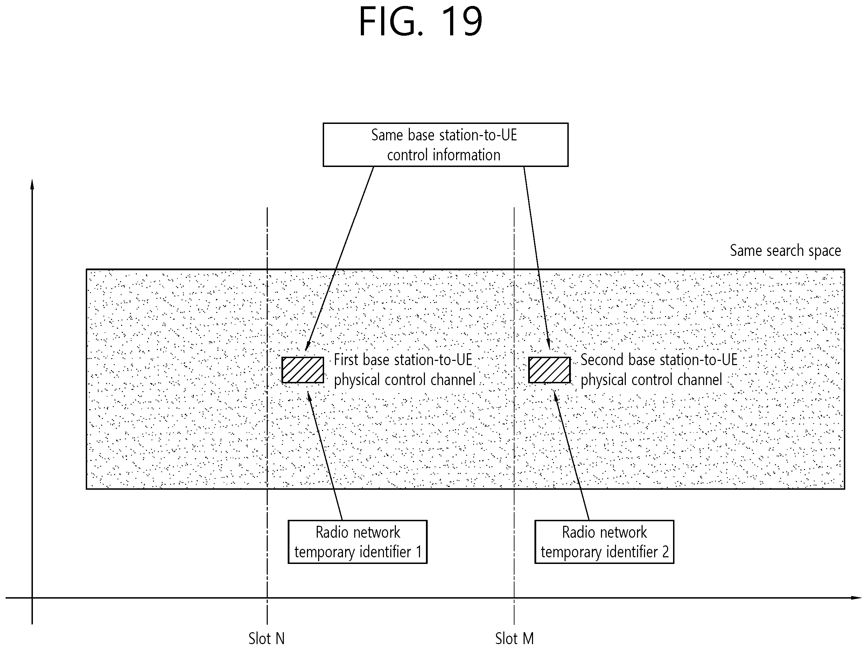

FIG. 19 shows the same base station-to-UE control information (e.g., DCI) repeatedly transmitted through a plurality of base station-to-UE physical control channel (e.g., PDCCH) resources according to an embodiment of the present disclosure. The embodiment of FIG. 19 may be combined with various embodiments of the present disclosure.

Referring to FIG. 19, a search space including control channel resources is shown. Here, the search space may include a first base station-to-UE physical control channel (e.g., PDCCH) resource and a second base station-to-UE physical control channel (e.g., PDCCH) resource.

For example, transmission of the first base station-to-UE physical control channel (e.g., PDCCH) may be performed based on a radio network temporary identifier 1 (e.g., RNTI), and transmission of the second base station-to-UE physical control channel (e.g., PDCCH) may be performed based on a radio network temporary identifier 2 (e.g., RNTI).

For example, the radio network temporary identifier 1 (e.g., RNTI) may not be known to a legacy UE that does not support a repetition transmission operation of a base station-to-UE physical control channel (e.g., PDCCH), and the legacy UE may not receive base station-to-UE control information (e.g., DCI) transmitted based on the radio network temporary identifier 1 (e.g., RNTI).

For example, based on a first base station-to-UE physical control channel (e.g., PDCCH) resource and a second base station-to-UE physical control channel (e.g., PDCCH) resource, the same base station-to-UE control information (e.g., DCI) may be transmitted (repeatedly).

For example, slot N and slot M may be different slots. For example, slot M may be N+1.

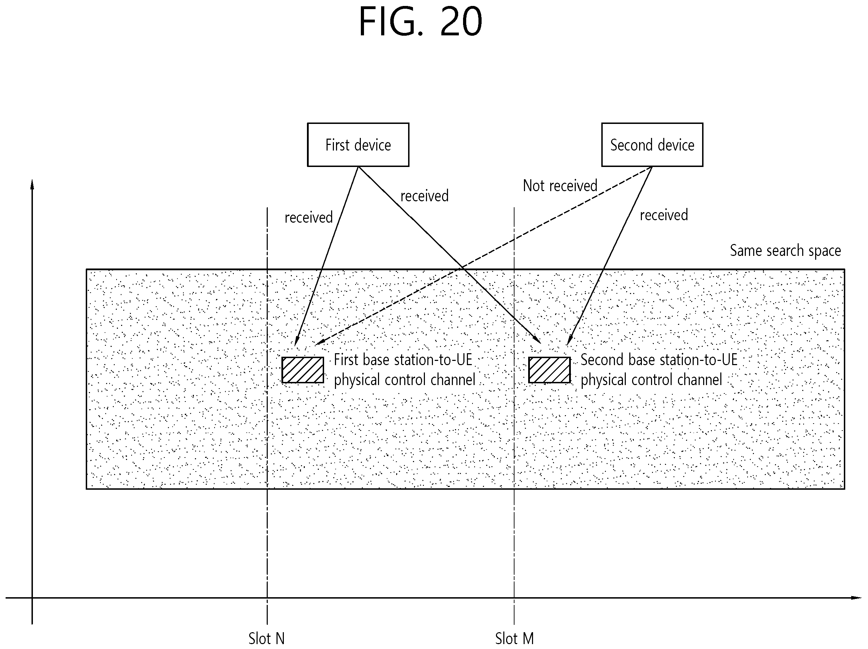

FIG. 20 shows the same base station-to-UE control information (e.g., DCI) repeatedly transmitted through a plurality of base station-to-UE physical control channel (e.g., PDCCH) resources according to an embodiment of the present disclosure. The embodiment of FIG. 20 may be combined with various embodiments of the present disclosure.

Referring to FIG. 20, a first base station-to-UE physical control channel (e.g., PDCCH) resource and a second base station-to-UE physical control channel (e.g., PDCCH) resource included in the same search space are shown, as in FIG. 19.

For example, a first device may be a device supporting a repetition transmission operation of a base station-to-UE physical control channel (e.g., PDCCH), and a second device may be a legacy device not supporting a repetition transmission operation of a base station-to-UE physical control channel (e.g., PDCCH).

For example, in this case, transmission of the first base station-to-UE physical control channel (e.g., PDCCH) may be received based on a radio network temporary identifier 1 (e.g., RNTI) only by a device supporting a repetition transmission operation of the base station-to-UE physical control channel (e.g., PDCCH).

For example, transmission of the second base station-to-UE physical control channel (e.g., PDCCH) may be received by a device even when the device does not support a repetition transmission operation of the base station-to-UE physical control channel (e.g., PDCCH), and therefore both the first device and the second device may receive transmission of the second base station-to-UE physical control channel (e.g., PDCCH) based on a radio network temporary identifier 2 (e.g., RNTI).

Various embodiments of the present disclosure may be applied only to transmission of a base station-to-UE physical control channel (e.g., PDCCH), base station-to-UE control information (e.g., DCI), and/or a base station-to-UE signal/channel (for example, a first system information block (e.g., SIB1) and/or another system information block (e.g., SIB), a random access response (e.g., RAR; random access response)) and/or a UE-to-base station signal/channel targeting a plurality of UEs.

The proposed method may be applied to devices described below. First, a processor 202 of a receiving UE may configure at least one bandwidth part (e.g., BWP; bandwidth part). The processor 202 of the receiving UE may control a transceiver 206 of the receiving UE to receive, from a transmitting UE, an inter-UE communication (e.g., SL communication)-related physical channel and/or an inter-UE communication (e.g., SL communication)-related reference signal on the at least one bandwidth part (e.g., BWP).

In a non-terrestrial network (e.g., NTN; non terrestrial network) environment in which a base station or a network does not exist on the ground (for example, when the base station or the network flies in an orbit), high pathloss may occur. In this case, due to the high pathloss, detection performance of a base station-to-UE physical control channel (e.g., PDCCH) for a first system information block (e.g., SIB1; system information block 1) may be significantly degraded.

Considering a narrowband environment, simply increasing an aggregation level or strength as a method for resolving this issue may have limitations, and increasing a duration of a control resource set (e.g., CORESET; control resource set) may involve complexity including consideration for coexistence with a legacy UE and redesign of a billing domain (BD)/control channel element (CCE), etc.

For example, remaining reserved bits of a master information block (e.g., MIB; master information block) may be insufficient to apply a base station-to-UE physical control channel (e.g., PDCCH) for a first system information block (e.g., SIB1) in order to indicate information related to search spacing linkage.

According to an embodiment of the present disclosure, a base station-to-UE physical control channel (e.g., PDCCH) may be repeatedly transmitted, and the repetition transmission may be performed based on different slots within the same control resource set (e.g., CORESET) and/or search space (or, for example, a base station-to-UE physical control channel (e.g., PDCCH) monitoring occasion of different slots and/or a base station-to-UE physical control channel (e.g., PDCCH) candidate resource of different slots).

For example, the base station-to-UE physical control channel (e.g., PDCCH) transmission may be for base station-to-UE control information (e.g., DCI; downlink control information) related to a single first system information block (e.g., SIB1). For example, whether repetition of a base station-to-UE physical control channel (e.g., PDCCH) transmission for base station-to-UE control information (e.g., DCI) related to a first system information block (e.g., SIB1) is activated may be indicated through a master information block (e.g., MIB).

According to various embodiments of the present disclosure, coverage of a base station-to-UE physical control channel (e.g., PDCCH) for a first system information block (e.g., SIB1) may be enhanced, and coexistence with a legacy UE may be supported per search space at the same time.

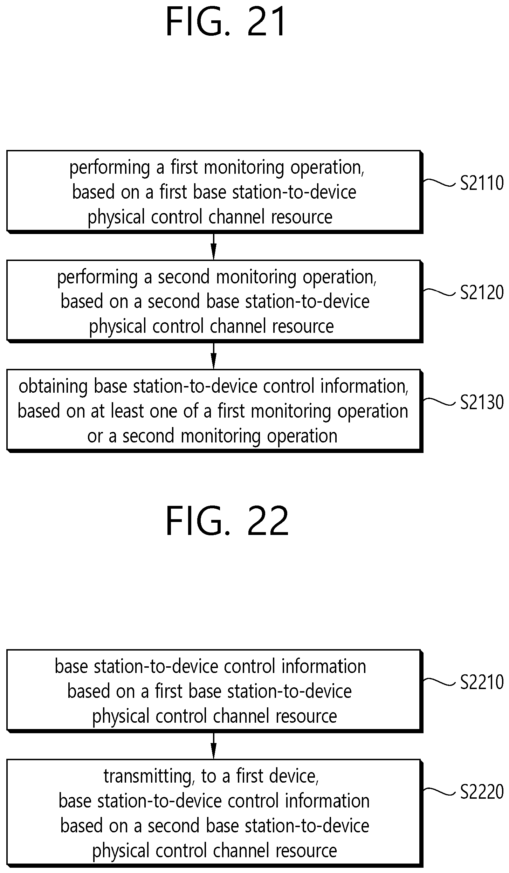

FIG. 21 shows a procedure of a method that may be performed by a first device according to an embodiment of the present disclosure. The embodiment of FIG. 21 may be combined with various embodiments of the present disclosure.

Referring to FIG. 21, in step S2110, a first device may perform a first monitoring operation, based on a first base station-to-device physical control channel resource. In step S2120, the first device may perform a second monitoring operation, based on a second base station-to-device physical control channel resource. In step S2130, the first device may obtain base station-to-device control information, based on at least one of the first monitoring operation or the second monitoring operation.

For example, the first base station-to-device physical control channel resource and the second base station-to-device physical control channel resource may be included in the same search space.

For example, the first base station-to-device physical control channel resource and the second base station-to-device physical control channel resource may be included in different slots in the same search space.

For example, additionally, the first device may receive, through a physical broadcast channel, information for whether the first base station-to-device physical control channel resource and the second base station-to-device physical control channel resource are included in different slots in the same search space.

For example, additionally, the first device may obtain information for a second search space different from a first search space. For example, the first base station-to-device physical control channel resource may be included in the first search space, and the second base station-to-device physical control channel resource may be included in the second search space.

For example, the first base station-to-device physical control channel resource and the second base station-to-device physical control channel resource may be related to the same control resource set.

For example, additionally, the first device may obtain information for a second control resource set different from a first control resource set. For example, the first base station-to-device physical control channel resource may be related to the first control resource set, and the second base station-to-device physical control channel resource may be related to the second control resource set.

For example, the information for the second control resource set may be obtained through a physical broadcast channel.

For example, a first radio network temporary identifier for the first monitoring operation and a second radio network temporary identifier for the second monitoring operation may be different.

For example, a type of a first radio network temporary identifier for the first monitoring operation and a type of a second radio network temporary identifier for the second monitoring operation may be different.

For example, the first base station-to-device physical control channel resource is a resource earlier than the second base station-to-device physical control channel resource, and, based on the type of the first radio network temporary identifier, a transmission based on the first base station-to-device physical control channel resource may be not received by a second device.

For example, the second device may be a device that does not include information related to a type of the first radio network temporary identifier.

The above-described embodiments may be applied to various devices described below. First, a processor 102 of a first device 100 may control a transceiver 106 to perform a first monitoring operation, based on a first base station-to-device physical control channel resource. And, the processor 102 of the first device 100 may control the transceiver 106 to perform a second monitoring operation, based on a second base station-to-device physical control channel resource. And, the processor 102 of the first device 100 may obtain base station-to-device control information, based on at least one of the first monitoring operation or the second monitoring operation.

According to an embodiment of the present disclosure, a first device may be proposed. For example, the first device may comprise: at least one transceiver; at least one processor; and at least one memory connected to the at least one processor and storing instructions. For example, the instructions, based on being executed by the at least one processor, may cause the first device to: perform a first monitoring operation, based on a first base station-to-device physical control channel resource; perform a second monitoring operation, based on a second base station-to-device physical control channel resource; and obtaining base station-to-device control information, based on at least one of the first monitoring operation or the second monitoring operation.

For example, the first base station-to-device physical control channel resource and the second base station-to-device physical control channel resource may be included in the same search space.

For example, the first base station-to-device physical control channel resource and the second base station-to-device physical control channel resource may be included in different slots in the same search space.

For example, additionally, the instructions, based on being executed by the at least one processor, cause first device to receive, through a physical broadcast channel, information for whether the first base station-to-device physical control channel resource and the second base station-to-device physical control channel resource are included in different slots in the same search space.

For example, additionally, the instructions, based on being executed by the at least one processor, cause first device to obtain information for a second search space different from a first search space. For example, the first base station-to-device physical control channel resource may be included in the first search space, and the second base station-to-device physical control channel resource may be included in the second search space.

For example, the first base station-to-device physical control channel resource and the second base station-to-device physical control channel resource may be related to the same control resource set.

For example, additionally, the instructions, based on being executed by the at least one processor, cause first device to obtain information for a second control resource set different from a first control resource set. For example, the first base station-to-device physical control channel resource may be related to the first control resource set, and the second base station-to-device physical control channel resource may be related to the second control resource set.

For example, the information for the second control resource set may be obtained through a physical broadcast channel.

For example, a first radio network temporary identifier for the first monitoring operation and a second radio network temporary identifier for the second monitoring operation may be different.

For example, a type of a first radio network temporary identifier for the first monitoring operation and a type of a second radio network temporary identifier for the second monitoring operation may be different.

For example, the first base station-to-device physical control channel resource is a resource earlier than the second base station-to-device physical control channel resource, and, based on the type of the first radio network temporary identifier, a transmission based on the first base station-to-device physical control channel resource may be not received by a second device.

For example, the second device may be a device that does not include information related to a type of the first radio network temporary identifier.

According to an embodiment of the present disclosure, a processing device adapted to control a first device may be proposed. For example, the processing device may comprise: at least one processor; and at least one memory connected to the at least one processor and storing instructions. For example, the instructions, based on being executed by the at least one processor, cause the first device to: perform a first monitoring operation, based on a first base station-to-device physical control channel resource; perform a second monitoring operation, based on a second base station-to-device physical control channel resource; and obtain base station-to-device control information, based on at least one of the first monitoring operation or the second monitoring operation.

According to an embodiment of the present disclosure, a non-transitory computer-readable storage medium storing instructions may be proposed. For example, the instructions, when executed, may cause a first device to: perform a first monitoring operation, based on a first base station-to-device physical control channel resource; perform a second monitoring operation, based on a second base station-to-device physical control channel resource; and obtaining base station-to-device control information, based on at least one of the first monitoring operation or the second monitoring operation.

FIG. 22 shows a procedure of a method that may be performed by a second device according to an embodiment of the present disclosure. The embodiment of FIG. 22 may be combined with various embodiments of the present disclosure.

Referring to FIG. 22, in step S2210, a second device may transmit, to a first device, base station-to-device control information based on a first base station-to-device physical control channel resource. In step S2220, the second device may transmit, to the first device, the base station-to-device control information based on a second base station-to-device physical control channel resource. For example, the first base station-to-device physical control channel resource and the second base station-to-device physical control channel resource may be included in different slots in the same search space.

For example, additionally, the second device may transmit, through a physical broadcast channel, information for whether the first base station-to-device physical control channel resource and the second base station-to-device physical control channel resource are included in the different slots in the same search space.

The above-described embodiments may be applied to various devices described below. First, a processor 202 of a second device 200 may control a transceiver 206 to transmit, to a first device 100, base station-to-device control information based on a first base station-to-device physical control channel resource. And, the processor 202 of the second device 200 may control the transceiver 206 to transmit, to the first device 100, the base station-to-device control information based on a second base station-to-device physical control channel resource. For example, the first base station-to-device physical control channel resource and the second base station-to-device physical control channel resource may be included in different slots in the same search space.

According to an embodiment of the present disclosure, a second device may be proposed. For example, the second device may comprise: at least one transceiver; at least one processor; and at least one memory connected to the at least one processor and storing instructions. For example, the instructions, based on being executed by the at least one processor, may cause the second device to: transmit, to a first device, base station-to-device control information based on a first base station-to-device physical control channel resource; and transmit, to the first device, the base station-to-device control information based on a second base station-to-device physical control channel resource, wherein the first base station-to-device physical control channel resource and the second base station-to-device physical control channel resource may be included in different slots in the same search space.

For example, the instructions, based on being executed by the at least one processor, may cause the second device to: transmit, through a physical broadcast channel, information for whether the first base station-to-device physical control channel resource and the second base station-to-device physical control channel resource are included in the different slots in the same search space.

Various embodiments of the present disclosure may be combined with each other.

Hereinafter, device(s) to which various embodiments of the present disclosure can be applied will be described.

The various descriptions, functions, procedures, proposals, methods, and/or operational flowcharts of the present disclosure described in this document may be applied to, without being limited to, a variety of fields requiring wireless communication/connection (e.g., 5G) between devices.

Hereinafter, a description will be given in more detail with reference to the drawings. In the following drawings/description, the same reference symbols may denote the same or corresponding hardware blocks, software blocks, or functional blocks unless described otherwise.

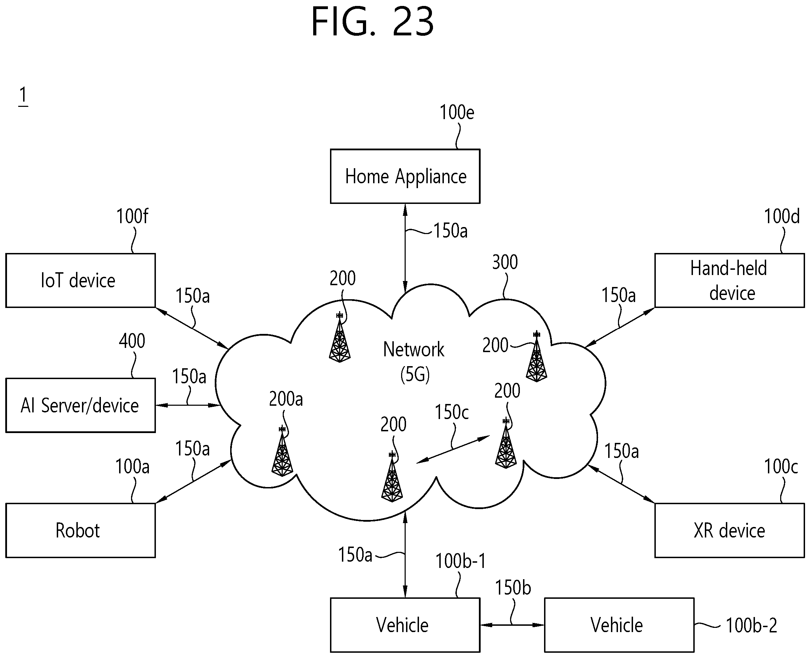

FIG. 23 shows a communication system 1, based on an embodiment of the present disclosure. The embodiment of FIG. 23 may be combined with various embodiments of the present disclosure.

Referring to FIG. 23, a communication system 1 to which various embodiments of the present disclosure are applied includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

Here, wireless communication technology implemented in wireless devices 100a to 100f of the present disclosure may include Narrowband Internet of Things for low-power communication in addition to LTE, NR, and 6G. In this case, for example, NB-IoT technology may be an example of Low Power Wide Area Network (LPWAN) technology and may be implemented as standards such as LTE Cat NB1, and/or LTE Cat NB2, and is not limited to the name described above. Additionally or alternatively, the wireless communication technology implemented in the wireless devices 100a to 100f of the present disclosure may perform communication based on LTE-M technology. In this case, as an example, the LTE-M technology may be an example of the LPWAN and may be called by various names including enhanced Machine Type Communication (eMTC), and the like. For example, the LTE-M technology may be implemented as at least any one of various standards such as 1) LTE CAT 0, 2) LTE Cat M1, 3) LTE Cat M2, 4) LTE non-Bandwidth Limited (non-BL), 5) LTE-MTC, 6) LTE Machine Type Communication, and/or 7) LTE M, and is not limited to the name described above. Additionally or alternatively, the wireless communication technology implemented in the wireless devices 100a to 100f of the present disclosure may include at least one of Bluetooth, Low Power Wide Area Network (LPWAN), and ZigBee considering the low-power communication, and is not limited to the name described above. As an example, the ZigBee technology may generate personal area networks (PAN) related to small/low-power digital communication based on various standards including IEEE 802.15.4, and the like, and may be called by various names.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

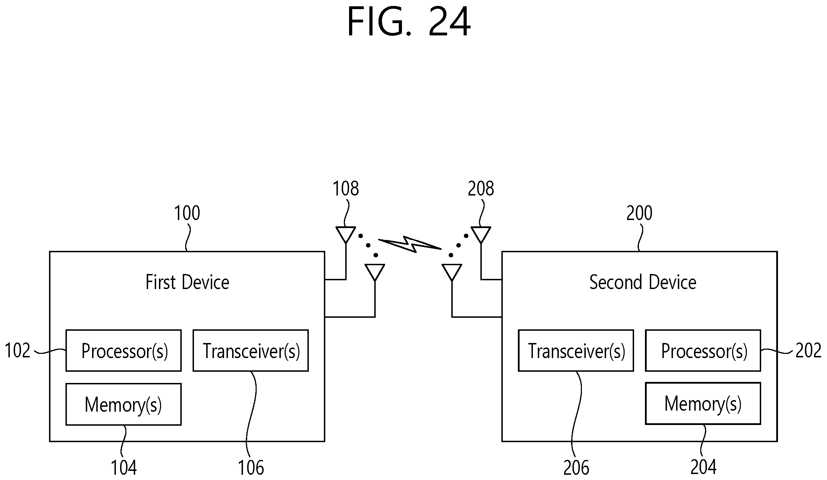

FIG. 24 shows wireless devices, based on an embodiment of the present disclosure. The embodiment of FIG. 24 may be combined with various embodiments of the present disclosure.

Referring to FIG. 24, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 23.

For example, in the following, description for a first wireless device (or apparatus) and a second wireless device (or apparatus) may be extended to a wireless device (or apparatus) corresponding to a third wireless device 300 (or apparatus) or a subsequent reference number. For example, a reference number of a processor of the third wireless device 300 may be 302, and a reference number of a transceiver may be 306.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

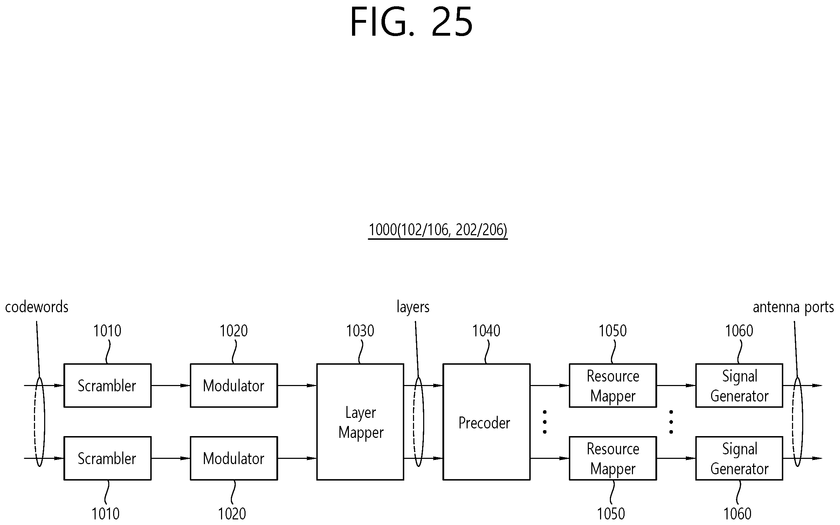

FIG. 25 shows a signal process circuit for a transmission signal, based on an embodiment of the present disclosure. The embodiment of FIG. 25 may be combined with various embodiments of the present disclosure.

Referring to FIG. 25, a signal processing circuit 1000 may include scramblers 1010, modulators 1020, a layer mapper 1030, a precoder 1040, resource mappers 1050, and signal generators 1060. An operation/function of FIG. 25 may be performed, without being limited to, the processors 102 and 202 and/or the transceivers 106 and 206 of FIG. 24. Hardware elements of FIG. 25 may be implemented by the processors 102 and 202 and/or the transceivers 106 and 206 of FIG. 24. For example, blocks 1010 to 1060 may be implemented by the processors 102 and 202 of FIG. 24. Alternatively, the blocks 1010 to 1050 may be implemented by the processors 102 and 202 of FIG. 24 and the block 1060 may be implemented by the transceivers 106 and 206 of FIG. 24.

Codewords may be converted into radio signals via the signal processing circuit 1000 of FIG. 25. Herein, the codewords are encoded bit sequences of information blocks. The information blocks may include transport blocks (e.g., a UL-SCH transport block, a DL-SCH transport block). The radio signals may be transmitted through various physical channels (e.g., a PUSCH and a PDSCH).

Specifically, the codewords may be converted into scrambled bit sequences by the scramblers 1010. Scramble sequences used for scrambling may be generated based on an initialization value, and the initialization value may include ID information of a wireless device. The scrambled bit sequences may be modulated to modulation symbol sequences by the modulators 1020. A modulation scheme may include pi/2-Binary Phase Shift Keying (pi/2-BPSK), m-Phase Shift Keying (m-PSK), and m-Quadrature Amplitude Modulation (m-QAM). Complex modulation symbol sequences may be mapped to one or more transport layers by the layer mapper 1030. Modulation symbols of each transport layer may be mapped (precoded) to corresponding antenna port(s) by the precoder 1040. Outputs z of the precoder 1040 may be obtained by multiplying outputs y of the layer mapper 1030 by an N*M precoding matrix W. Herein, N is the number of antenna ports and M is the number of transport layers. The precoder 1040 may perform precoding after performing transform precoding (e.g., DFT) for complex modulation symbols. Alternatively, the precoder 1040 may perform precoding without performing transform precoding.

The resource mappers 1050 may map modulation symbols of each antenna port to time-frequency resources. The time-frequency resources may include a plurality of symbols (e.g., a CP-OFDMA symbols and DFT-s-OFDMA symbols) in the time domain and a plurality of subcarriers in the frequency domain. The signal generators 1060 may generate radio signals from the mapped modulation symbols and the generated radio signals may be transmitted to other devices through each antenna. For this purpose, the signal generators 1060 may include Inverse Fast Fourier Transform (IFFT) modules, Cyclic Prefix (CP) inserters, Digital-to-Analog Converters (DACs), and frequency up-converters.

Signal processing procedures for a signal received in the wireless device may be configured in a reverse manner of the signal processing procedures 1010 to 1060 of FIG. 25. For example, the wireless devices (e.g., 100 and 200 of FIG. 24) may receive radio signals from the exterior through the antenna ports/transceivers. The received radio signals may be converted into baseband signals through signal restorers. To this end, the signal restorers may include frequency downlink converters, Analog-to-Digital Converters (ADCs), CP remover, and Fast Fourier Transform (FFT) modules. Next, the baseband signals may be restored to codewords through a resource demapping procedure, a postcoding procedure, a demodulation processor, and a descrambling procedure. The codewords may be restored to original information blocks through decoding. Therefore, a signal processing circuit (not illustrated) for a reception signal may include signal restorers, resource demappers, a postcoder, demodulators, descramblers, and decoders.

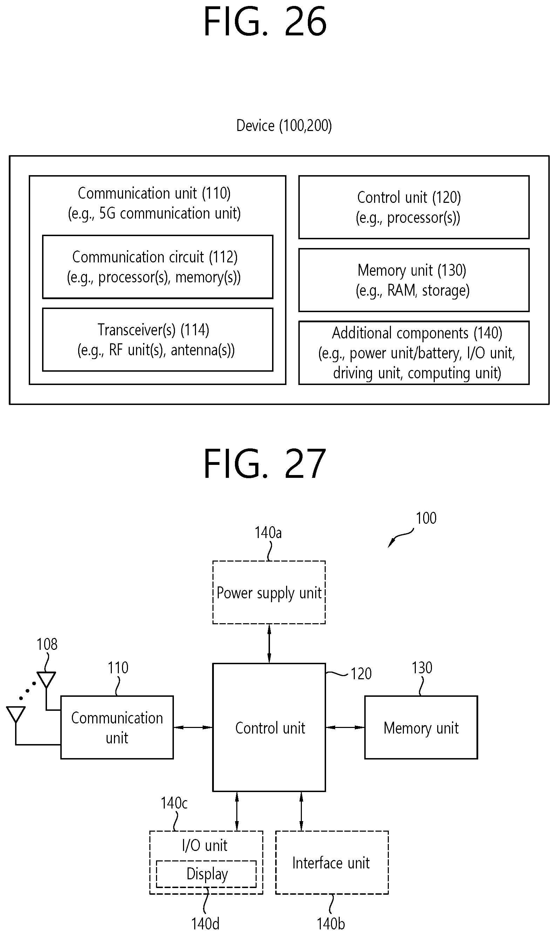

FIG. 26 shows another example of a wireless device, based on an embodiment of the present disclosure. The wireless device may be implemented in various forms according to a use-case/service (refer to FIG. 23). The embodiment of FIG. 26 may be combined with various embodiments of the present disclosure.

Referring to FIG. 26, wireless devices 100 and 200 may correspond to the wireless devices 100 and 200 of FIG. 24 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 24. For example, the transceiver(s) 114 may include the one or more transceivers 106 and 206 and/or the one or more antennas 108 and 208 of FIG. 24. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 23), the vehicles (100b-1 and 100b-2 of FIG. 23), the XR device (100c of FIG. 23), the hand-held device (100d of FIG. 23), the home appliance (100e of FIG. 23), the IoT device (100f of FIG. 23), a digital broadcast terminal, a hologram device, a public safety device, an MTC device, a medicine device, a fintech device (or a finance device), a security device, a climate/environment device, the AI server/device (400 of FIG. 23), the BSs (200 of FIG. 23), a network node, etc. The wireless device may be used in a mobile or fixed place according to a use-example/service.

In FIG. 26, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

Hereinafter, an example of implementing FIG. 26 will be described in detail with reference to the drawings.

FIG. 27 shows a hand-held device, based on an embodiment of the present disclosure. The hand-held device may include a smartphone, a smartpad, a wearable device (e.g., a smartwatch or a smartglasses), or a portable computer (e.g., a notebook). The hand-held device may be referred to as a mobile station (MS), a user terminal (UT), a Mobile Subscriber Station (MSS), a Subscriber Station (SS), an Advanced Mobile Station (AMS), or a Wireless terminal (WT). The embodiment of FIG. 27 may be combined with various embodiments of the present disclosure.

Referring to FIG. 27, a hand-held device 100 may include an antenna unit 108, a communication unit 110, a control unit 120, a memory unit 130, a power supply unit 140a, an interface unit 140b, and an I/O unit 140c. The antenna unit 108 may be configured as a part of the communication unit 110. Blocks 110 to 130/140a to140c correspond to the blocks 110 to 130/140 of FIG. 26, respectively.

The communication unit 110 may transmit and receive signals (e.g., data and control signals) to and from other wireless devices or BSs. The control unit 120 may perform various operations by controlling constituent elements of the hand-held device 100. The control unit 120 may include an Application Processor (AP). The memory unit 130 may store data/parameters/programs/code/commands needed to drive the hand-held device 100. The memory unit 130 may store input/output data/information. The power supply unit 140a may supply power to the hand-held device 100 and include a wired/wireless charging circuit, a battery, etc. The interface unit 140b may support connection of the hand-held device 100 to other external devices. The interface unit 140b may include various ports (e.g., an audio I/O port and a video I/O port) for connection with external devices. The I/O unit 140c may input or output video information/signals, audio information/signals, data, and/or information input by a user. The I/O unit 140c may include a camera, a microphone, a user input unit, a display unit 140d, a speaker, and/or a haptic module.

As an example, in the case of data communication, the I/O unit 140c may acquire information/signals (e.g., touch, text, voice, images, or video) input by a user and the acquired information/signals may be stored in the memory unit 130. The communication unit 110 may convert the information/signals stored in the memory into radio signals and transmit the converted radio signals to other wireless devices directly or to a BS. The communication unit 110 may receive radio signals from other wireless devices or the BS and then restore the received radio signals into original information/signals. The restored information/signals may be stored in the memory unit 130 and may be output as various types (e.g., text, voice, images, video, or haptic) through the I/O unit 140c.

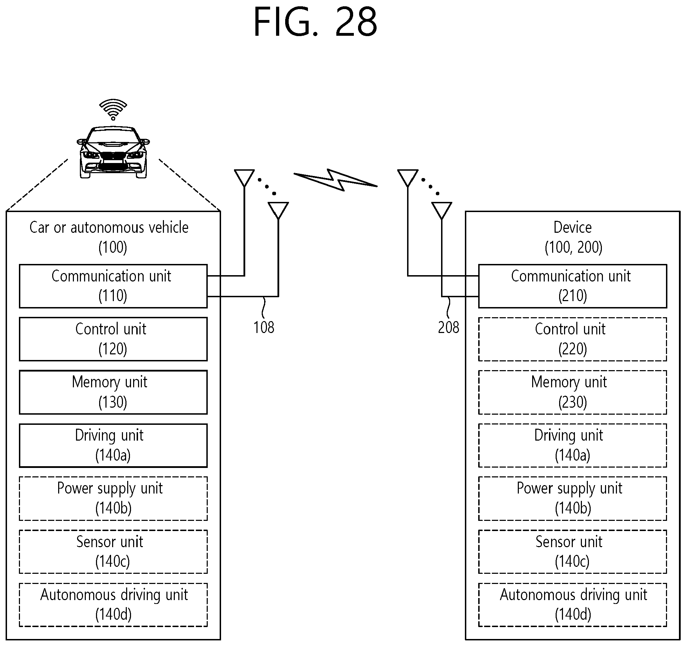

FIG. 28 shows a vehicle or an autonomous vehicle, based on an embodiment of the present disclosure. The vehicle or autonomous vehicle may be implemented by a mobile robot, a car, a train, a manned/unmanned Aerial Vehicle (AV), a ship, etc. The embodiment of FIG. 28 may be combined with various embodiments of the present disclosure.

Referring to FIG. 28, a vehicle or autonomous vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 26, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous vehicle 100. The control unit 120 may include an Electronic Control Unit (ECU). The driving unit 140a may cause the vehicle or the autonomous vehicle 100 to drive on a road. The driving unit 140a may include an engine, a motor, a powertrain, a wheel, a brake, a steering device, etc. The power supply unit 140b may supply power to the vehicle or the autonomous vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a conflict sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous vehicles and provide the predicted traffic information data to the vehicles or the autonomous vehicles.

Claims in the present description can be combined in a various way. For instance, technical features in method claims of the present description can be combined to be implemented or performed in an apparatus, and technical features in apparatus claims can be combined to be implemented or performed in a method. Further, technical features in method claim(s) and apparatus claim(s) can be combined to be implemented or performed in an apparatus. Further, technical features in method claim(s) and apparatus claim(s) can be combined to be implemented or performed in a method.

## Claims

1. A method comprising:
performing a first monitoring operation, based on a first base station-to-device physical control channel resource;
performing a second monitoring operation, based on a second base station-to-device physical control channel resource; and
obtaining base station-to-device control information, based on at least one of the first monitoring operation or the second monitoring operation.

2. The method of claim 1, wherein the first base station-to-device physical control channel resource and the second base station-to-device physical control channel resource are included in the same search space.

3. The method of claim 1, wherein the first base station-to-device physical control channel resource and the second base station-to-device physical control channel resource are included in different slots in the same search space.

4. The method of claim 1, further comprising:
receiving, through a physical broadcast channel, information for whether the first base station-to-device physical control channel resource and the second base station-to-device physical control channel resource are included in different slots in the same search space.

5. The method of claim 1, further comprising:
obtaining information for a second search space different from a first search space,
wherein the first base station-to-device physical control channel resource is included in the first search space, and
wherein the second base station-to-device physical control channel resource is included in the second search space.

6. The method of claim 1, wherein the first base station-to-device physical control channel resource and the second base station-to-device physical control channel resource are related to the same control resource set.

7. The method of claim 1, further comprising:
obtaining information for a second control resource set different from a first control resource set,
wherein the first base station-to-device physical control channel resource is related to the first control resource set, and
wherein the second base station-to-device physical control channel resource is related to the second control resource set.

8. The method of claim 7, wherein the information for the second control resource set is obtained through a physical broadcast channel.

9. The method of claim 1, wherein a first radio network temporary identifier for the first monitoring operation and a second radio network temporary identifier for the second monitoring operation are different.

10. The method of claim 1, wherein a type of a first radio network temporary identifier for the first monitoring operation and a type of a second radio network temporary identifier for the second monitoring operation are different.

11. The method of claim 10, wherein the first base station-to-device physical control channel resource is a resource earlier than the second base station-to-device physical control channel resource, and
wherein, based on the type of the first radio network temporary identifier, a transmission based on the first base station-to-device physical control channel resource is not received by a second device.

12. The method of claim 11, wherein the second device is a device that does not include information related to a type of the first radio network temporary identifier.

13. The method of claim 1, wherein the method is performed by a first device.

14. A first device comprising:
at least one transceiver;
at least one processor; and
at least one memory connected to the at least one processor and storing instructions,
wherein the instructions, based on being executed by the at least one processor, cause the first device to:
perform a first monitoring operation, based on a first base station-to-device physical control channel resource;
perform a second monitoring operation, based on a second base station-to-device physical control channel resource; and
obtain base station-to-device control information, based on at least one of the first monitoring operation or the second monitoring operation.

15. A processing device adapted to control a first device, the processing device comprising:
at least one processor; and
at least one memory connected to the at least one processor and storing instructions,
wherein the instructions, based on being executed by the at least one processor, cause the first device to:
perform a first monitoring operation, based on a first base station-to-device physical control channel resource;
perform a second monitoring operation, based on a second base station-to-device physical control channel resource; and
obtain base station-to-device control information, based on at least one of the first monitoring operation or the second monitoring operation.

16. A non-transitory computer-readable storage medium storing instructions that, when executed, cause a first device to:
perform a first monitoring operation, based on a first base station-to-device physical control channel resource;
perform a second monitoring operation, based on a second base station-to-device physical control channel resource; and
obtain base station-to-device control information, based on at least one of the first monitoring operation or the second monitoring operation.

17. A method comprising:
transmitting, to a first device, base station-to-device control information based on a first base station-to-device physical control channel resource; and
transmitting, to the first device, the base station-to-device control information based on a second base station-to-device physical control channel resource,
wherein the first base station-to-device physical control channel resource and the second base station-to-device physical control channel resource are included in different slots in the same search space.

18. The method of claim 17, further comprising:
transmitting, through a physical broadcast channel, information for whether the first base station-to-device physical control channel resource and the second base station-to-device physical control channel resource are included in the different slots in the same search space.

19. A second device comprising:
at least one transceiver;
at least one processor; and
at least one memory connected to the at least one processor and storing instructions,
wherein the instructions, based on being executed by the at least one processor, cause the second device to:
transmit, to a first device, base station-to-device control information based on a first base station-to-device physical control channel resource; and
transmit, to the first device, the base station-to-device control information based on a second base station-to-device physical control channel resource,
wherein the first base station-to-device physical control channel resource and the second base station-to-device physical control channel resource are included in different slots in the same search space.

20. The second device of claim 19, wherein the instructions, based on being executed by the at least one processor, cause the second device to:
transmit, through a physical broadcast channel, information for whether the first base station-to-device physical control channel resource and the second base station-to-device physical control channel resource are included in the different slots in the same search space.
